(19) Europäisches Patentamt
European Patent Office
Office européen des brevets

(11) EP 4 786 550 A1

(12) **EUROPEAN PATENT APPLICATION**
published in accordance with Art. 153(4) EPC

(43) Date of publication:
**05.08.2026 Bulletin 2026/32**

(21) Application number: **24871385.1**

(22) Date of filing: **07.06.2024**

(51) International Patent Classification (IPC):
***C09D 11/38*** *(2014.01)* ***B41J 2/01*** *(2006.01)*

(52) Cooperative Patent Classification (CPC):
**B41J 2/01; B41M 5/00; C09D 11/38**

(86) International application number:
**PCT/JP2024/020907**

(87) International publication number:
**WO 2025/069579 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 JP 2023166390**

(71) Applicants:
- **artience Co., Ltd.**
  **Tokyo 104-8377 (JP)**
- **TOYOCOLOR CO., LTD.**
  **Tokyo 104-8381 (JP)**

(72) Inventors:
- **MORITA, Riho**
  **Tokyo 104-8381 (JP)**
- **NOMURA, Takanori**
  **Tokyo 104-8381 (JP)**
- **SUNAOSHI, Kazushi**
  **Tokyo 104-8381 (JP)**

(74) Representative: **SSM Sandmair Patentanwälte Rechtsanwalt Partnerschaft mbB**
**Joseph-Wild-Straße 20**
**81829 München (DE)**

(54) **AQUEOUS INKJET INK AND PRINTED ARTICLE**

(57) One embodiment of the present invention relates to an aqueous inkjet ink containing a colorant, a resin, a water-soluble organic solvent, and a surfactant, wherein the Tg value for the resin is within a range from 50 to 130°C, the water-soluble organic solvent contains a (di)propylene glycol monoalkyl ether-based solvent (S1) in which the number of carbon atoms at the molecular terminal is from 2 to 4, and the surfactant contains an acetylenediol-based surfactant having an HLB value of 10 or less, and a siloxane-based surfactant and/or (poly) ethylene glycol monoalkyl ether-based surfactant.

EP 4 786 550 A1

## Description

TECHNICAL FIELD

Embodiments of the present invention relate to an aqueous inkjet ink and a printed item produced using the aqueous inkjet ink.

BACKGROUND ART

Unlike forme-based printing methods such as offset printing methods and gravure printing methods, digital printing methods do not require a plate making film or printing plate, and therefore cost reductions and compatibility with high-mix low-volume production can be more easily achieved.

In the inkjet printing method, which represents one type of digital printing method, liquid droplets of inkjet inks are discharged from extremely fine nozzles and adhered directly to a printing substrate to obtain text and/or images (hereinafter also referred to using the generic term "printed item", wherein the abovementioned "image" includes seamless images such as a solid image (an image having a print coverage rate of 100%) and a checkered pattern image). The inkjet printing method also offers other advantages such as reduced noise from the printing device used, favorable operability and ease of color printing, and is therefore widely used for output devices in office and household applications. Furthermore, improvements in inkjet technology mean that the inkjet printing method is also being increasingly used in industrial applications.

Conventionally, in industrial applications, solvent-based inks or ultraviolet-curable inks have typically been used for the inkjet printing method. However, in recent years, from the viewpoints of health and safety, and environmental considerations, the demand for aqueous inks is growing.

Aqueous inks used in the inkjet printing method (hereinafter also described as simply "for inkjet") have conventionally been used on plain paper or the like. In other words, as well as containing water as the main component, these inks also contain an added water-soluble organic solvent such as glycerol to control the wet spreadability of the ink on the printing substrate and the drying properties. When an aqueous ink for inkjet (hereinafter also referred to as an "aqueous inkjet ink" or simply an "ink") containing these liquid components is used to print a pattern composed of text and/or an image onto a printing substrate, the liquid components penetrate into the printing substrate and dry, thereby fixing the pattern.

On the other hand, printing substrates for inkjet printing include not only substrates of high permeability such as plain papers, high-quality papers and recycled papers, but also low-permeability substrates such as coated papers, art papers and lightly coated papers, and impermeable substrates such as film substrates. Until now, the production of printed items having practically applicable print quality on printing substrates of high permeability and printing substrates of low permeability has been possible using aqueous inkjet inks. However, in the case of printing to film substrates, because the liquid droplets of the aqueous inkjet ink undergo absolutely no permeation into the printing substrate following impact, drying through permeation does not occur. As a result, deterioration in the printed image quality tends to occur, either due to the liquid droplets coalescing and causing mixed color bleeding, or due to solid images not covering satisfactorily, leading to white voids (a phenomenon in which regions develop on the printing substrate in which the aqueous inkjet ink is not retained). Particularly in the case of the industrial applications described above, there are growing demands for increased use in packaging applications such as labeling applications and soft packaging applications, and enabling the production of printed items having superior printed image quality on the types of film substrates typically used in these applications could be said to be an extremely important factor in expanding the use of aqueous inkjet inks in these applications.

Further, in the case of impermeable printing substrates, aqueous inkjet inks undergo absolutely no permeation into the substrate, and therefore achieving satisfactory adhesion can be difficult. If the adhesion to the impermeable substrate is unsatisfactory, then a number of problems may occur, including detachment of the printed matter due to scratching or the like, or in those cases when the printed items are stored either in a rolled state or a stacked state, causing pressure to be applied to the printed surface (the surface to which the aqueous inkjet ink has been applied), the problem of blocking (a phenomenon that occurs when the printing substrate or the like pressed against the printed surface is peeled away from the printed surface, and a portion of the dried inkjet ink film (the ink coating) is removed with the printing substrate) may occur. In order to address these problems, various methods have been investigated (Patent Documents 1 to 3).

PRIOR ART DOCUMENTS

PATENT DOCUMENTS

Patent Document 1: JP 2022-85548 A
Patent Document 2: JP 2020-100851 A
Patent Document 3: JP 2022-102163 A

SUMMARY OF THE INVENTION

PROBLEMS TO BE SOLVED BY THE INVENTION

Among these methods, methods in which a resin having a binder function is added to the aqueous inkjet ink are widely known as methods for improving the adhesion to the printing substrate. This effect derives from hydrogen bonding between the anionic groups in the resin and functional groups that exist at the surface of the printing substrate, and/or chemical bonding forces resulting from intermolecular interactions. In particular, by adding at least a prescribed amount of a resin having a binder function, and using a resin having a high glass transition temperature (Tg), the ink coating becomes tougher, enabling printed items having superior adhesion, abrasion resistance, and blocking resistance and the like to be obtained.

For example, Patent Document 1 discloses a white ink composition in which an acrylic-based resin having an acid value within a range from 50.0 to 100.0 mgKOH/g and a glass transition temperature within a range from 20.0 to 50.0°C is used as a fixing resin. Further, Patent Document 1 discloses that by using this white ink composition a printed item having excellent blocking resistance can be produced. On the other hand, in Patent Document 1, no evaluation was made regarding the jetting stability of the white ink composition, and in subsequent investigations by the inventors of the present invention, depending on the jetting conditions, stable jetting was sometimes difficult to achieve. Furthermore, in terms of imparting the printed items with particularly superior blocking resistance, even when the white ink composition contained an acrylic-based resin for which the glass transition temperature was the maximum value of 50.0°C, the blocking resistance was not entirely satisfactory.

On the other hand, methods in which a surfactant is added to an aqueous inkjet ink are known as methods for improving the solid coverage. In such cases, the surfactant orients rapidly at the liquid droplet surfaces of the ink liquid droplets following impact of the liquid droplets of the aqueous inkjet ink with the printing substrate, thereby lowering the surface tension of the ink, accelerating the wetting of the printing substrate, and improving the solid coverage.

However, in those cases where the surfactant is retained and becomes localized at the surface of the ink coating film, there is a possibility that those localized portions become prone to peeling, resulting in blocking.

Patent Document 2 discloses an aqueous magenta ink for inkjet which contains a water-soluble organic solvent with a hydroxyl group, having an HLB value within a range from 2.0 to 8.0 and a low surface tension, and a surfactant having an HLB value within a range from 1.5 to 8.0, in combination with an azo pigment. More specifically, the examples of Patent Document 2 disclose an aqueous magenta ink containing a water-soluble resin having a glass transition temperature of 107°C, 1,2-hexanediol, an acetylenediol-based surfactant, and a polyether-modified siloxane-based surfactant and the like, and this ink is said to yield printed matter with no white voids or mixed color bleeding. However, when the inventors of the present invention conducted their own evaluations, they found that although the ink aqueous magenta disclosed in Patent Document 2 yielded improvements in the solid coverage and the like, the blocking resistance was inferior.

Further, Patent Document 3 discloses an aqueous ink for inkjet recording containing a polyethylene wax, 1,2-propanediol, a specific glycol monoether and water, and having prescribed values for the weighted average boiling points and the blend amounts of the organic solvents. In the examples of Patent Document 3, also including an acetylenediol-based surfactant (SURFYNOL 104) is said to yield excellent jetting stability and image fastness. However, in Patent Document 3, no consideration was given to solid coverage, and investigations could be said to be inadequate.

As outlined above, an aqueous inkjet ink which combines favorable jetting stability and solid coverage in the resulting printed matter, and is also capable of producing printed items with excellent blocking resistance is yet to be found.

Accordingly, one embodiment of the present invention has the object of providing an aqueous inkjet ink which has excellent jetting stability, and is capable of producing printed items having superior solid coverage and blocking resistance. Further, another embodiment of the present invention has the object of providing a printed item having excellent solid coverage and blocking resistance.

MEANS TO SOLVE THE PROBLEMS

As a result of intensive investigation, the inventors of the present invention discovered that an aqueous inkjet ink described below was able to resolve all of the issues, described above, simultaneously and to a high degree.

In other words, one embodiment of the present invention relates to an aqueous inkjet ink containing a colorant, a resin, a water-soluble organic solvent and a surfactant, wherein the Tg value for the resin is within a range from 50 to 130°C, the water-soluble organic solvent contains a (di)propylene glycol monoalkyl ether-based solvent (S1) represented by a

general formula 1 shown below, and the surfactant contains an acetylenediol-based surfactant having an HLB value of 10 or less and a siloxane-based surfactant and/or (poly)ethylene glycol monoalkyl ether-based surfactant.

General formula 1: $R^1$-(O-CH($CH_3$)-$CH_2$)$_n$-OH

(In general formula 1, $R^1$ represents an alkyl group of 2 to 4 carbon atoms, and n represents 1 or 2.)

Further, another embodiment of the present invention relates to a printed item obtained by printing the aqueous inkjet ink described above onto a printing substrate.

EFFECTS OF THE INVENTION

The aqueous inkjet ink representing one embodiment of the present invention has excellent jetting stability, and is capable of producing printed items having superior solid coverage and blocking resistance. Further, another embodiment of the present invention has the effect of yielding a printed item having excellent solid coverage and blocking resistance.

EMBODIMENTS FOR CARRYING OUT THE INVENTION

An aqueous inkjet ink that represents one embodiment of the present invention (in the embodiments of the present invention, also referred to as simply "the aqueous inkjet ink of an embodiment of the present invention" or "the aqueous inkjet ink") and a printed item (hereinafter referred to as a "printed item of an embodiment of the present invention") are described below. The present invention is not limited to the following embodiments, and also includes other variations, provided they do not alter the essential aspects of the present invention.

<Aqueous Inkjet Ink>

The aqueous inkjet ink according to an embodiment of the present invention exhibits excellent jetting stability, and is capable of producing printed items having superior solid coverage and blocking resistance. Although the reasons for these characteristics are not entirely clear, the inventors of the present invention surmise the following. However, the present invention is in no way restricted by this hypothesis.

As described above, generally, when a resin having a binder function is added to an aqueous inkjet ink, the adhesion to the printing substrate improves. Further, by adding at least a prescribed amount of a resin having a binder function to the aqueous inkjet ink, and using a resin having a high glass transition temperature (Tg), the ink coating becomes tougher, and printed items having superior adhesion, abrasion resistance, and blocking resistance and the like can be obtained. Moreover, the better the film-forming capability of the resin, the more the adhesion, abrasion resistance and blocking resistance can be improved. Accordingly, in the aqueous inkjet ink of an embodiment of the present invention, a resin having a glass transition temperature within a range from 50 to 130°C is used. By using a resin having a glass transition temperature within this range, even if, for example, the resulting printed matter is stored in a wound state, with pressure acting on the printed surface for a long period, the ink coating film resists deformation and blocking can be prevented.

However, resins having a high glass transition temperature also exhibit a high minimum film formation temperature (the lowest temperature at which a uniform and continuous coating film is formed when a solution containing the resin is applied to a substrate and then dried). As a result, aqueous inkjet inks containing such resins suffer from poor film formability following impact on the printing substrate. An ink coating film formed with unsatisfactory film formation is unable to develop sufficient coating film strength, and the blocking resistance and the like also deteriorate.

In such cases, a film-forming assistant is generally used as a way of improving the film formability. For example, dipropylene glycol monomethyl ether exhibits favorable water solubility, has a low boiling point (a boiling point at 1 atmosphere of 190°C), and exhibits a powerful action as a film-forming assistant, and is therefore frequently used in aqueous inkjet inks. However, favorable water solubility means poor compatibility with resins, and therefore depending on the resin being used, the dipropylene glycol monomethyl ether may exhibit poor compatibility. It is thought that this type of poor compatibility is affected by the fact that the terminal structures in dipropylene glycol monomethyl ether are methyl groups, which have little effect as hydrophobic groups.

Accordingly, as a result of intensive investigations, the inventors of the present invention discovered the (di)propylene glycol monoalkyl ether-based solvents (S1) represented by the general formula 1 in which the alkyl group has 2 to 4 carbon atoms. Compared with dipropylene glycol monomethyl ether and the like, these compounds exhibit a higher compatibility with resins, while still retaining suitably favorable water solubility, and therefore when used in aqueous inkjet inks, can function favorably as film-forming assistants and improve the resin film formability.

However, when the film formability is enhanced, there is, for example, a possibility that, even at room temperature, the aqueous inkjet ink may dry and undergo film formation in the vicinity of the nozzles of the inkjet head,

causing jetting defects.

In this regard, in embodiments of the present invention, by also using an acetylenediol-based surfactant having an HLB value of 10 or less, the above issue can be addressed. Although the detailed mechanism is unclear, it is thought that because acetylenediol-based surfactants exhibit favorable compatibility with the solvent (S1), development of the functions of the solvent (S1) inside the inkjet head can be suppressed by the acetylenediol-based surfactant. On the other hand, as described below, following impact of the aqueous inkjet ink liquid droplets on the printing substrate, it is thought that because the acetylenediol-based surfactant having an HLB value of 10 or less orients rapidly at the liquid droplet surface (the gas-liquid interface), the component inhibiting the functions of the solvent (S1) is reduced, enabling the solvent (S1) to function effectively as a film-forming assistant. In this manner, by using a combination of the (di)propylene glycol monoalkyl ether-based solvent (S1) and an acetylenediol-based surfactant having an HLB value of 10 or less, a combination of favorable film formability and jetting stability can be achieved, even in those cases where a resin having a high glass transition temperature is used.

On the other hand, in order to obtain printed items having favorable solid coverage, the aqueous inkjet ink is required to wet-spread rapidly on the printing substrate. Accordingly, as described above, a technique in which a surfactant is added to the aqueous inkjet ink to lower the ink surface tension is widely used. The acetylenediol-based surfactant used in embodiments of the present invention generally has a low molecular weight, and has the effect of significantly lowering the surface tension. In particular, acetylenediol-based surfactants having an HLB value of 10 or less exhibit extremely fast orientation at the liquid droplet surface, and therefore are effective in improving the wet spreadability of the aqueous inkjet ink. However, due to the small HLB value, acetylenediol-based surfactants having an HLB value of 10 or less have poor solubility in water. As a result, there is a possibility that the acetylenediol-based surfactant having an HLB value of 10 or less may become localized at the nozzle end face of the inkjet head and destabilize the gas-liquid interface, resulting in jetting defects.

Accordingly, in the aqueous inkjet ink of an embodiment of the present invention, in addition to the acetylenediol-based surfactant having an HLB value of 10 or less, a siloxane-based surfactant and/or a (poly)ethylene glycol monoalkyl ether-based surfactant is also included. It is thought that by using a combination of the acetylenediol-based surfactant having an HLB value of 10 or less and a siloxane-based surfactant and/or (poly)ethylene glycol monoalkyl ether-based surfactant, the two types of surfactant become miscible, with both surfactants existing stably within the aqueous inkjet ink. As a result, localization of the surfactants at the gas-liquid interface of the nozzle end face is less likely to occur, and the jetting stability can be improved. Further, following impact of the aqueous inkjet ink on the printing substrate, because the siloxane-based surfactant and/or (poly)ethylene glycol monoalkyl ether-based surfactant also contributes to orientation at the liquid droplet surface and a reduction in the ink surface tension, the wet spreadability on the printing substrate is further accelerated, enabling printed items of favorable solid coverage to be obtained.

On the other hand, these surfactants are also retained at the surface of the ink coating film following drying. In particular, if localized concentrations of the surfactants form in certain locations on the ink coating film surface, then when the printed matter is unrolled from a wound state, for example to perform post-processing of the printed matter, locations of low cohesive strength where the surfactants are localized may detach from the printing substrate, causing blocking.

In this regard, in embodiments of the present invention, by including the (di)propylene glycol monoalkyl ether-based solvent (S1) represented by the general formula 1, which has the characteristics of both a hydrophilic group and a hydrophobic group, the surfactants including the acetylenediol-based surfactant having an HLB value of 10 or less become more compatible with the other materials such as water. In other words, in the aqueous inkjet ink according to an embodiment of the present invention, it is thought that the solvent (S1) not only has the function described above of improving the resin film formability, but also exhibits a function of improving the surfactant compatibility. As a result, excessive localization of the surfactants at the surface of the ink coating film is avoided, and the blocking resistance can be improved.

As described above, the aqueous inkjet ink that represents one embodiment of the present invention has excellent jetting stability, and can also produce printed items having favorable solid coverage. Moreover, blocking caused by surfactant localization or unsatisfactory film formation of the resin having a glass transition temperature of 50 to 130°C can be suppressed.

Each of the components contained in the aqueous inkjet ink of an embodiment of the present invention is described below in further detail.

<Colorant>

The aqueous inkjet ink of an embodiment of the present invention contains a colorant. Further, in terms of obtaining printed items with superior density and concealing properties, as well as excellent light resistance and water resistance and the like, a pigment is preferably included as the colorant.

<<Pigment>>

Conventionally known organic and inorganic pigments may be used as desired as the pigment, and for example, pigments represented by the following color index names may be used.

In other words, red pigments include C.I. Pigment Red 52, 5, 7, 9, 12, 17, 22, 23, 31, 48:1, 48:2, 48:3, 48:4, 49:1, 49:2, 57:1, 57:2, 112, 122, 123, 146, 147, 149, 150, 166, 168, 170, 171, 175, 176, 177, 178, 184, 185, 188, 202, 207, 209, 254, 255, 260, 264, 266, 269, and 282;

violet pigments include C.I. Pigment Violet 19, 23, 29, 32, 36, 37, 42, and 50;
orange pigments include C.I. Pigment Orange 1, 2, 3, 5, 7, 13, 14, 15, 16, 22, 34, 36, 38, 40, 43, 47, 48, 49, 51, 52, 53, 60, 61, 62, 64, 65, 66, 69, 71, and 73;
blue pigments include C.I. Pigment Blue 15, 15:3, 15:4, 15:6, 16, 60, 64, and 79;
green pigments include C.I. Pigment Green 7, 10, 36, and 48;
yellow pigments include C.I. Pigment Yellow 1, 2, 3, 5, 12, 13, 14, 16, 17, 24, 73, 74, 83, 87, 93, 94, 95, 97, 98, 109, 110, 111, 112, 120, 126, 127, 128, 129, 137, 138, 139, 147, 150, 151, 154, 155, 166, 167, 168, 170, 180, 185, and 213;
black pigments include C.I. Pigment Black 1, 7, and 11; and
white pigments include C.I. Pigment White 4, 5, 6, and 21.

One of these pigments may be used alone, or a combination of two or more pigments may be used. Further, solid solutions formed from two or more of the pigments exemplified above may also be used as the pigment.

In one embodiment, the aqueous inkjet ink preferably contains a white pigment (and preferably C.I. Pigment White 6) as the pigment. Although the exact reasons are unclear, a white aqueous inkjet ink (aqueous white ink) containing a white pigment (and preferably C.I. Pigment White 6) produced as an aqueous inkjet ink of the embodiment of the present invention described above exhibits particularly superior jetting stability and excellent blocking resistance of the printed items.

The amount of the pigment contained within the aqueous inkjet ink of an embodiment of the present invention may be adjusted in accordance with the intended usage application for the printed items produced using the aqueous inkjet ink, but for example, is preferably within a range from 0.5 to 30% by mass relative to the total mass of the aqueous inkjet ink. Further, other than the case of an aqueous white ink, in terms of obtaining printed items of high density without impairing the jetting stability of the aqueous inkjet ink, the amount of the pigment is more preferably within a range from 1 to 15% by mass, and particularly preferably from 1.5 to 10% by mass. On the other hand, in the case of an aqueous white ink, in terms of obtaining printed items with superior concealing properties without impairing the jetting stability of the aqueous white ink, the amount of the pigment is more preferably within a range from 5 to 25% by mass, and particularly preferably from 10 to 20% by mass.

<Resin>

The aqueous inkjet ink of an embodiment of the present invention contains a resin.

Generally known forms for the resins used in aqueous inkjet inks include water-soluble resins and resin microparticles. In the aqueous inkjet ink of an embodiment of the present invention, the resin contained in the aqueous inkjet ink may be either a water-soluble resin or resin microparticles. Further, a combination of a water-soluble resin and resin microparticles may also be used.

In embodiments of the present invention, a resin having a solubility of at least 1 g in 100 g of water at 25°C is deemed a "water-soluble resin", and a resin for which this solubility is less than 1 g is deemed a "water-insoluble resin". Further, among the water-insoluble resins, those resins that are dispersed in particulate form in water and have a volume-based median diameter (also referred to as D50 in embodiments of the present invention) within a range from 10 to 1,000 nm are referred to as "resin microparticles".

The D50 value in embodiments of the present invention represents a value measured in an environment at 25°C using a dynamic light-scattering particle size distribution analyzer such as the Nanotrac UPA-EX150 manufactured by MicrotracBEL Corporation.

Examples of the types of resins that may be used in the aqueous inkjet ink of an embodiment of the present invention include acrylic resins, styrene resins, styrene-maleic acid (anhydride) resins, olefin-maleic acid (anhydride) resins, urethane resins, polyester resins, vinyl chloride resins, vinyl chloride-vinyl acetate resins, polyolefin resins, and vinyl alcohol resins. One of these resins may be used alone, or a combination of two or more resins may be used.

In embodiments of the present invention, the term "acrylic resin" describes a resin formed using at least one compound selected from the group consisting of acrylic acid, methacrylic acid, acrylate esters and methacrylate esters as a polymerizable monomer (although a styrene-based monomer may also be used). Further, the term "maleic acid (anhydride)" means at least one compound selected from among maleic acid and maleic anhydride.

The resin may be used for a number of purposes, including as a binder, or for pigment dispersion or the like. Further, the resin may be used for one particular purpose, or may be used for a combination of purposes.

In the aqueous inkjet ink of an embodiment of the present invention, from the viewpoints of imparting strength and blocking resistance to the printed items, the resin is preferably used as a binder. Further, in terms of improving the jetting stability, in those cases where the aqueous inkjet ink of an embodiment of the present invention contains a pigment as a colorant, it is preferable that a different resin from the above resin used as a binder is used for the purpose of pigment dispersion, and/or that the resin used as a binder is also used for the purpose of pigment dispersion (in other words, the binder resin described below also functions as a pigment dispersing resin).

In embodiments of the present invention, the expression "used as a binder" means the resin is used for the purposes of imparting strength (fastness) to the ink coating film and/or imparting improved adhesion to the printing substrate. An ink coating film having favorable strength also exhibits superior abrasion resistance. Examples of resins used as a binder include the resin that constitutes the main component of the ink coating film. Further, the form of that resin may be a water-soluble resin or resin microparticles, but is preferably resin microparticles.

Furthermore, examples of resins used for the purpose of pigment dispersion include resin microparticles that encapsulate the pigment, and resins (which may be either water-soluble resins or resin microparticles) that have an adsorption rate to the pigment of at least 35% by mass.

One example of the method used for measuring the adsorption rate to the pigment involves subjecting a dispersion of the pigment, which may be diluted with water if required (or an ink that contains no solid components other than the resin being evaluated), to a centrifugation treatment until the supernatant becomes transparent (for example, centrifugation of a 5 mL sample at 80,000 rpm for 4 hours), and then measuring the resin contained in the collected supernatant (for example, by leaving the supernatant to stand in an environment at 100°C, and following complete removal of the liquid component, measuring the mass of the residue following evaporation, and deeming this mass the amount of resin). By subsequently subtracting the amount of resin contained in the supernatant from the amount of resin (WR0 [g]) contained in the pigment dispersion (or ink) subjected to the centrifugation treatment, and dividing the resulting value by the above WR0 value, the adsorption rate can be calculated.

<<Binder Resin>>

As described above, in one embodiment, in terms of enabling improvements in the strength and blocking resistance of the printed items, the aqueous inkjet ink preferably contains a resin that is used as a binder (also referred to as a "binder resin" in embodiments of the present invention). In those cases where the aqueous inkjet ink of an embodiment of the present invention contains a binder resin, the resin used for that binder resin, selected from among those resins exemplified above, is preferably at least one type of resin selected from the group consisting of acrylic resins, urethane resins and polyester resins.

The glass transition temperature (Tg) of the resin is preferably within a range from 50 to 130°C, more preferably from 80 to 130°C, and particularly preferably from 90 to 130°C. As described above, by using a resin having this type of glass transition temperature, the strength and blocking resistance of the printed items improve. In embodiments of the present invention, the glass transition temperature (Tg) may be within a range from 50.0 to 130.0°C, from 80.0 to 130.0°C, or from 90.0 to 130.0°C.

The glass transition temperature of the resin can be measured in accordance with the method prescribed in JIS K 7121:2012. Specifically, approximately 10 mg of a sample of the target resin is placed in an aluminum pan, the mass of which has been measured in advance, and following measurement of the mass again, a lid is placed on the pan to seal the pan. Subsequently, this test container and a sample pan prepared without placing a resin inside the pan are set in holders inside a DSC-60 apparatus (differential scanning calorimeter) manufactured by Shimadzu Corporation, and measurements are conducted while the temperature is raised at a rate of 10°C/minute, thus yielding a DSC chart. Then the point of intersection between the baseline on the low-temperature side and a tangent at the inflection point of the DSC curve is determined, and the temperature at this point of intersection is deemed the glass transition temperature. Indium is used for temperature correction.

On the other hand, in the case of an acrylic resin, the value calculated using formula 2 shown below may be used as the glass transition temperature.

Formula 2:

$$1/Tg = \sum(Wn/Tgn)$$

In formula 2, Tg represents the glass transition temperature (K), Wn represents the mass percentage of a structural unit formed from a polymerizable monomer n within the resin, and Tgn represents the glass transition temperature (K) of a homopolymer of that structural unit. The Tgn value may use, for example, the value listed in

"Polymer Handbook (4th edition)" (published by Wiley Inc. 1998).

The acid value of the binder resin is preferably within a range from 1 to 100 mgKOH/g, more preferably from 0 to 80 mgKOH/g, and particularly preferably from 10 to 60 mgKOH/g. By ensuring that the acid value falls within this range, even if a portion of the aqueous inkjet ink dries in the vicinity of the nozzles of the inkjet head, any significant increase in the viscosity of the aqueous inkjet ink can be suppressed, meaning the jetting stability can be improved.

In embodiments of the present invention, the "acid value of a resin" means the number of mg of potassium hydroxide (KOH) required to neutralize the acid groups within 1 g of the resin. In embodiments of the present invention, a value calculated using the method described below is used as the acid value. For example, in the case where a resin contains a polymerizable monomer, with a molecular weight of Ma and having na groups of an acid group of valence va within each molecule, in an amount of Wa % by mass relative to the total mass of all the polymerizable monomers that constitute the resin, the acid value (mgKOH/g) of the resin is determined using formula 3 shown below.

Formula 3:

$$(\text{Acid value}) = \{(va \times na \times Wa) \div (100 \times Ma)\} \times 56.11 \times 1000$$

In formula 3, the numerical value "56.11" is the molecular weight of potassium hydroxide.

From the viewpoint of obtaining an aqueous inkjet ink having excellent jetting stability, as well as excellent solid coverage and superior blocking resistance for the printed matter, the amount of the binder resin contained within the aqueous inkjet ink of an embodiment of the present invention, expressed as a solid fraction equivalent value relative to the total mass of the aqueous inkjet ink, is preferably within a range from 0.3 to 15% by mass, more preferably from 1.0 to 14% by mass, and particularly preferably from 2.0 to 13% by mass.

Furthermore, from the viewpoints of imparting favorable adhesiveness to the substrate and improving the blocking resistance and the like, the amount of the binder resin preferably represents at least 50% by mass, and more preferably at least 60% by mass, of the total mass of all resins.

<<Pigment Dispersing Resin>>

In those cases where the aqueous inkjet ink of an embodiment of the present invention contains a pigment as a colorant, a resin used for the purpose of pigment dispersion (also referred to as a "pigment dispersing resin" in embodiments of the present invention) may also be used. In such cases, the pigment dispersing resin, selected from among those resins exemplified above, is preferably at least one type of resin selected from the group consisting of acrylic resins, styrene-maleic acid (anhydride) resins, and olefin-maleic acid (anhydride) resins.

The acid value of the pigment dispersing resin is preferably within a range from 100 to 450 mgKOH/g, more preferably from 120 to 400 mgKOH/g, and particularly preferably from 150 to 350 mgKOH/g. By ensuring that the acid value falls within this range, the dispersion stability of the pigment can be maintained, and stable jetting from the inkjet head can be achieved regardless of usage conditions. Further, favorable solubility of the pigment dispersing resin in water can be ensured, and favorable interactions can be achieved between molecules of the pigment dispersing resin, meaning the viscosity of the pigment dispersion can be suppressed, and the jetting stability from the inkjet head can be further improved.

From the viewpoints of the dispersion stability of the pigment and the jetting stability, the amount of the pigment dispersing resin incorporated in the aqueous inkjet ink of an embodiment of the present invention, expressed as a solid fraction equivalent value relative to the amount of the pigment, is preferably within a range from 1 to 40% by mass, and more preferably from 2 to 30% by mass.

<Water-Soluble Organic Solvent>

The aqueous inkjet ink of an embodiment of the present invention contains a water-soluble organic solvent. Further, as mentioned above, the aqueous inkjet ink contains the (di)propylene glycol monoalkyl ether-based solvent (S1) represented by the above general formula 1. In embodiments of the present invention, the expression "water-soluble organic solvent" indicates a solvent that exhibits a solubility in 25°C water of at least 1% by mass, and is a liquid at 25°C.

<<(Di)propylene Glycol Monoalkyl Ether-based Solvent (S1)>>

The (di)propylene glycol monoalkyl ether-based solvent (S1) represented by the above general formula 1 exhibits favorable compatibility with resins, while also exhibiting a suitable high water solubility, and therefore when used in the aqueous inkjet ink, can function favorably as a film-forming assistant, thereby improving the film formability of the resin. Further, by using this solvent in combination with an acetylenediol-based surfactant having an HLB value of 10 or less, development of the functions of the solvent (S1) can be suppressed inside the inkjet head, enabling drying and film

formation of the aqueous inkjet ink inside the inkjet head, and resulting jetting defects, to be prevented. Moreover, by including the solvent (S1), the surfactants including the acetylenediol-based surfactant having an HLB value of 10 or less become more compatible with the other materials in the aqueous inkjet ink. As a result, excessive localization of the surfactants at the surface of the ink coating film is avoided, and the blocking resistance improves.

Compounds that may be used as the (di)propylene glycol monoalkyl ether-based solvent (S1) represented by the general formula 1 include propylene glycol monoethyl ether, propylene glycol monopropyl ether, propylene glycol monobutyl ether, dipropylene glycol monoethyl ether, dipropylene glycol monopropyl ether, and dipropylene glycol monobutyl ether. One of these compounds may be used alone, or a combination of two or more compounds may be used.

From the viewpoints of achieving a combination of water solubility and resin compatibility, and ensuring favorable affinity with the acetylenediol-based surfactant having an HLB value of 10 or less, the alkyl group that exists at the molecular terminal of the (di)propylene glycol monoalkyl ether-based solvent (S1) (namely, $R^1$ in the above general formula 1) preferably has 2 or 3 carbon atoms, and 3 carbon atoms are particularly preferred.

Further, dipropylene glycol monoalkyl ethers, namely compounds of the general formula 1 in which n represents 2, can be used favorably as the (di)propylene glycol monoalkyl ether-based solvent (S1). Although the exact reasons are unclear, dipropylene glycol monoalkyl ethers exhibit excellent functionality as film-forming assistants, and can improve the film formability of the resin even when only a small amount is added. Further, because the number of propylene oxide structures having hydrophobicity is larger, the affinity with the acetylenediol-based surfactant having an HLB value of 10 or less is also excellent, resulting in good prevention of jetting defects and improved blocking resistance for the printed items.

From the viewpoints outlined above, it is particularly desirable that the aqueous inkjet ink of an embodiment of the present invention contains dipropylene glycol monopropyl ether as the (di)propylene glycol monoalkyl ether-based solvent (S1). Dipropylene glycol monopropyl ether has a propyl group at the molecular terminal, and therefore has superior compatibility with resins, but the water solubility of the dipropylene glycol monopropyl ether itself can also be ensured. As a result, the solvent functions favorable as a film-forming assistant, and can dramatically improve the film formability of the resin. Furthermore, dipropylene glycol monopropyl ether can also favorably assist the compatibility of surfactants including the acetylenediol-based surfactant having an HLB value of 10 or less with other materials, thereby improving the jetting stability and the blocking resistance of the printed items.

The amount of the (di)propylene glycol monoalkyl ether-based solvent (S1) contained in the aqueous inkjet ink of an embodiment of the present invention, relative to the total mass of the aqueous inkjet ink, is preferably within a range from 0.3 to 8% by mass, more preferably from 0.5 to 7% by mass, and even more preferably from 1 to 6% by mass.

On the other hand, as mentioned above, because the (di)propylene glycol monoalkyl ether-based solvent (S1) functions as a film-forming assistant for the resin having a glass transition temperature within a range from 50 to 130°C, the amount of the (di)propylene glycol monoalkyl ether-based solvent (S1) is preferably determined on the basis of the amount of the resin having a glass transition temperature within a range from 50 to 130°C. In one embodiment, if the mass of the (di) propylene glycol monoalkyl ether-based solvent (S1) contained within the aqueous inkjet ink of the present invention is deemed 1, then the mass of the resin having a glass transition temperature within a range from 50 to 130°C is preferably within a range from 0.5 to 12.5, and particularly preferably from 0.7 to 5.0. By ensuring that the amount of the resin having a glass transition temperature within a range from 50 to 130°C falls within this range, the (di)propylene glycol monoalkyl ether-based solvent (S1) is able to function favorably as a film-forming assistant, and the blocking resistance and abrasion resistance of the printed items can be improved.

<<Water-Soluble Organic Solvent (S2) having SP Value of 12 to 14 $(cal/cm^3)^{1/2}$>>

In addition to the (di)propylene glycol monoalkyl ether-based solvent (S1) described above, the aqueous inkjet ink of an embodiment of the present invention preferably also contains a water-soluble organic solvent (S2) having an SP value within a range from 12 to 14 $(cal/cm^3)^{1/2}$. In particular, alkanediols of 3 to 5 carbon atoms are preferred as the water-soluble organic solvent (S2) having an SP value within a range from 12 to 14 $(cal/cm^3)^{1/2}$. Alkanediols of 3 to 5 carbon atoms exhibit both hydrophilicity due to the hydroxyl groups and hydrophobicity due to the alkylene group, and can improve the compatibility within the aqueous inkjet ink of surfactants including the acetylenediol-based surfactant having an HLB value of 10 or less and the resin described above, and are thought to contribute to improvements in the jetting stability and the blocking resistance in combination with the (di)propylene glycol monoalkyl ether-based solvent (S1).

In embodiments of the present invention, the term "SP value" is an abbreviation of "Solubility Parameter". Known methods for determining the SP value include a method in which the SP value is calculated from physical property values of the compound, a method in which the SP value is calculated from the molecular structure, and a method in which the SP value is measured by testing. In embodiments of the present invention, SP values represent values calculated by Fedors' estimation method represented by formula 4 shown below.

Formula 4:

$$(\text{SP value}) = (\sum Ecoh/\sum V)^{1/2}$$

In formula 4, Ecoh represents the cohesive energy prescribed for each functional group, and V represents the molar molecular volume prescribed for each functional group. These Ecoh and V values are described in R.F. Fedors, "Polymer Engineering & Science" (Vol. 14, No. 2, 1974, pp. 147 to 154).

Examples of alkanediols of 3 to 5 carbon atoms that can be used favorably as the water-soluble organic solvent (S2) having an SP value within a range from 12 to 14 $(cal/cm^3)^{1/2}$ include 1,2-propanediol (13.5), 1,3-propanediol (13.7), 1,2-butanediol (12.8), 1,3-butanediol (12.8), 1,4-butanediol (12.9), 2,3-butanediol (12.5), 1,2-pentanediol (12.2), 1,3-pentanediol (12.2), 1,4-pentanediol (12.2), 1,5-pentanediol (12.4), 2-methyl-1,3-propanediol (12.8), and 3-methyl-1,3-butanediol (12.6). One of these compounds may be used alone, or a combination of two or more of these compounds may be used. The numerical values in the above parentheses represent the SP value (units: $(cal/cm^3)^{1/2}$) of each compound. In embodiments of the present invention, the SP value may be within a range from 12.0 to 14.0 $(cal/cm^3)^{1/2}$.

Among the various possibilities, the water-soluble organic solvent (S2) preferably contains 1,2-propanediol and/or 1,2-butanediol, and more preferably contains 1,2-propanediol. These water-soluble organic solvents exhibit high hydrophilicity, but do not exhibit excessive affinity with acetylenediol-based surfactants, siloxane-based surfactants and/or (poly)ethylene glycol monoalkyl ether-based surfactants, and are therefore thought not to inhibit the orientation of the surfactants at the gas-liquid interface, enabling the effects of that orientation to be maximized and enabling printed items with favorable solid coverage to be obtained. Further, because these water-soluble organic solvents volatilize rapidly following impact on the printing substrate, printed items that also exhibit excellent blocking resistance can be obtained.

Furthermore, besides alkanediols of 3 to 5 carbon atoms, diethylene glycol (13.0), triethylene glycol (12.1), and ethanol (12.6) and the like may also be used as the water-soluble organic solvent (S2) having an SP value within a range from 12 to 14 $(cal/cm^3)^{1/2}$. The numerical values in the above parentheses represent the SP value (units: $(cal/cm^3)^{1/2}$) of each compound.

The amount of the water-soluble organic solvent (S2) having an SP value within a range from 12 to 14 $(cal/cm^3)^{1/2}$ included in the aqueous inkjet ink of an embodiment of the present invention, expressed relative to the total mass of the aqueous inkjet ink, is preferably within a range from 5 to 35% by mass, more preferably from 10 to 30% by mass, and even more preferably from 10 to 25% by mass. In particular, in those cases where the water-soluble organic solvent (S2) having an SP value within a range from 12 to 14 $(cal/cm^3)^{1/2}$ includes 1,2-propanediol, an amount of the 1,2-propanediol that represents 10 to 15% by mass relative to the total mass of the aqueous inkjet ink is extremely desirable.

When an alkanediol of 3 to 5 carbon atoms is included as the water-soluble organic solvent (S2) having an SP value within a range from 12 to 14 $(cal/cm^3)^{1/2}$, from the viewpoints of enabling an improvement in the compatibility of the surfactants and resin, and improving the jetting stability and blocking resistance, the mass of the alkanediol of 3 to 5 carbon atoms within the aqueous inkjet ink, relative to a value of 1.0 for the mass of the (di)propylene glycol monoalkyl ether-based solvent (S1) within the aqueous inkjet ink, is preferably within a range from 0.5 to 8.0, more preferably from 1.0 to 7.0, and particularly preferably from 2.0 to 6.0.

In one embodiment, the aqueous inkjet ink of the present invention preferably contains at least one type of solvent selected from among (di)propylene glycol monoalkyl ether-based solvents (S1) represented by the above general formula 1, and also contains at least one type of solvent selected from the group consisting of (di)propylene glycol monoalkyl ether-based solvents (S1) represented by the general formula 1 and other water-soluble organic solvents described below. For example, in the aqueous inkjet ink of an embodiment of the present invention, it is desirable that the ink contains dipropylene glycol monopropyl ether as the (di)propylene glycol monoalkyl ether-based solvent (S1) represented by the general formula 1, and also contains at least one compound selected from the group consisting of propylene glycol monomethyl ether, propylene glycol monoethyl ether, propylene glycol monopropyl ether and propylene glycol monobutyl ether. Propylene glycol monoethyl ether, propylene glycol monopropyl ether and propylene glycol monobutyl ether are also examples of the (di)propylene glycol monoalkyl ether-based solvent (S1) represented by the general formula 1. As described above, dipropylene glycol monopropyl ether yields excellent film formability for the resin, and has excellent affinity with the acetylenediol-based surfactant having an HLB value of 10 or less. On the other hand, the dipropylene glycol monopropyl ether has slightly lower hydrophilicity compared with other (di)propylene glycol monoalkyl ether-based solvents (S1). Accordingly, by using the compounds listed above, which have a smaller molecular weight than the dipropylene glycol monopropyl ether and also exhibit excellent affinity with the dipropylene glycol monopropyl ether, particularly superior jetting stability and printed matter blocking resistance can be achieved.

In those cases where the aqueous inkjet ink of an embodiment of the present invention contains dipropylene glycol monopropyl ether, and at least one compound selected from the group consisting of propylene glycol monomethyl ether, propylene glycol monoethyl ether, propylene glycol monopropyl ether and propylene glycol monobutyl ether, if the total mass of the propylene glycol monomethyl ether, propylene glycol monoethyl ether, propylene glycol monopropyl ether and propylene glycol monobutyl ether is deemed 1.0, then the amount of the dipropylene glycol monopropyl ether is

preferably within a range from 0.2 to 5.0, more preferably from 0.3 to 4.0, even more preferably from 0.4 to 3.0, and particularly preferably from 0.5 to 2.0.

<<Other Water-Soluble Organic Solvents>>

The aqueous inkjet ink of an embodiment of the present invention may also contain one or more water-soluble organic solvents other than the (di)propylene glycol monoalkyl ether-based solvent (S1) and the water-soluble organic solvent (S2) having an SP value within a range from 12 to 14 $(cal/cm^3)^{1/2}$ (in embodiments of the present invention, these solvents are referred to as "other water-soluble organic solvents").

In the aqueous inkjet ink of an embodiment of the present invention, examples of other water-soluble organic solvents that may be used include alkanediols of 6 carbon atoms; alkanetriols (provided the number of carbon atoms is from 3 to 6); polyalkylene glycols (provided the alkylene glycol group is an ethylene glycol group (ethylene oxide group) or a propylene glycol group (propylene oxide group), and the number of these oxyalkylene groups is from 2 to 4); (poly)ethylene glycol monoalkyl ethers (provided the number of ethylene glycol groups is from 1 to 4, and the number of carbon atoms in the terminal alkyl group is from 1 to 4), (di)propylene glycol monomethyl ether, and tripropylene glycol monoalkyl ethers (provided the number of carbon atoms in the terminal alkyl group is from 1 to 4); alkylene glycol dialkyl ethers (provided the alkylene glycol group is an ethylene glycol group or propylene glycol group, the number of alkylene glycol groups is from 1 to 4, and the number of carbon atoms in each of the terminal alkyl groups is from 1 to 4); lactams (provided the number of atoms constituting the lactam ring is from 5 to 7, and in which an alkyl group of 1 or 2 carbon atoms, a hydroxyalkyl group of 1 or 2 carbon atoms, or a vinyl group may be bonded to the nitrogen atom and/or a carbon atom that forms the lactam ring); and alkanol amines (provided the number of amino groups is 1, the number of hydroxyl groups is from 1 to 3, and the number of carbon atoms is from 3 to 9). One of these other water-soluble organic solvents may be used alone, or a combination of two or more such solvents may be used.

In embodiments of the present invention, the term "(poly)ethylene glycol" represents both ethylene glycol and polyethylene glycol.

The total amount of water-soluble organic solvents contained in the aqueous inkjet ink of an embodiment of the present invention, relative to the total mass of the aqueous inkjet ink, is preferably within a range from 5 to 50% by mass, more preferably from 9 to 40% by mass, even more preferably from 12 to 35% by mass, and particularly preferably from 15 to 30% by mass.

<Surfactants>

<<Acetylenediol-Based Surfactant having an HLB Value of 10 or less>>

The aqueous inkjet ink of an embodiment of the present invention contains the acetylenediol-based surfactant having an HLB value of 10 or less as a surfactant. From the viewpoint of the speed of orientation at the liquid droplet surface mentioned above, from the viewpoint of enabling suppression of jetting defects, which can occur in the vicinity of the nozzles of the inkjet head due to drying of the aqueous inkjet ink, in combination with the (di)propylene glycol monoalkyl ether-based solvent (S1), and from the viewpoint of further improving the blocking resistance, the above HLB value is preferably within a range from 3 to 9, and more preferably from 4 to 8. In embodiments of the present invention, the HLB value may be 10.0 or less, or within a range from 3.0 to 9.0, from 4.0 to 8.4, or from 4.0 to 8.0.

In particular, it is thought that by ensuring the HLB value is 10.0 or less (preferably 9 or less, and more preferably 8 or less), because the acetylenediol-based surfactant orients rapidly at the liquid droplet surface, following this orientation, the component inhibiting development of the functions of the solvent (S1) substantially disappears, enabling the solvent (S1) to function satisfactorily as a film-forming assistant. As a result, even in those cases where a resin having a high glass transition temperature is used, aqueous inkjet ink having superior film formability can still be readily obtained.

In embodiments of the present invention, the HLB (Hydrophile-Lipophile Balance) value is one parameter representing the degrees of hydrophilicity and hydrophobicity of a material. Known methods for calculating the HLB value include Griffin's method, Davies' method, and the Kawakami method, but in embodiments of the present invention, HLB values for the acetylenediol-based surfactant were calculated using Griffin's method.

Griffin's method uses the molecular weight of the target compound to determine the HLB value in accordance with formula 5 shown below. The smaller the HLB value, the higher the hydrophobicity of the target compound, and the greater the HLB value, the higher the hydrophilicity.

$$\text{HLB value} = 20 \times (\text{total of molecular weights of hydrophilic portions}) \div (\text{molecular weight of material}) \qquad \text{Formula 5:}$$

Examples of the acetylenediol-based surfactant having an HLB value of 10 or less include 2,4,7,9-tetramethyl-5-decyne-4,7-diol, 2,5,8,11-tetramethyl-6-dodecyne-5,8-diol, hexadec-8-yne-7,10-diol, 4,7-dipropyl-dec-5-yne-4,7-diol, 6,9-dimethyl-tetradec-7-yne-6,9-diol, 3,6-diisopropyl-2,7-dimethyloct-4-yne-3,6-diol, octadec-9-yne-8,11-diol, 7,10-dimethylhexadec-8-yne-7,10-diol, 5,8-dibutyldodec-6-yne-5,8-diol, 4,7-diisobutyl-2,9-dimethyl-dec-5-yne-4,7-diol, 5,14-diethyl-8,11-dimethyloctadec-9-yne-8,11-diol, and ethylene oxide- and/or propylene oxide-modified products of these compounds. One of these compounds may be used alone, or a combination of two or more compounds may be used. These compounds may be synthesized using conventionally known synthesis methods, or commercially available products may be used. Examples of such commercially available products include SURFYNOL 61, 104E, 104H, 104A, 104BC, 104DPM, 104PA, 104PG-50, 420, 440, 2502, SE and SE-F and DYNOL 604 and 607 (manufactured by Evonik Industries AG), and OLFINE E1004, PD-001, PD-002W, and PD-004 (manufactured by Nissin Chemical Co., Ltd.).

Among the various possibilities, in terms of ensuring that the above mechanism functions effectively and is effective in improving the wet spreadability of the ink, and in terms of improving the affinity between the acetylenediol-based surfactant and the water-soluble organic solvent to achieve better compatibility and ensure printed items with more favorable solid coverage, the above acetylenediol-based surfactant having an HLB value of 10 or less is preferably at least one surfactant selected from the group consisting of SURFYNOL 440, SURFYNOL 2502, SURFYNOL SE-F, DYNOL 607 and OLFINE E1004. Further, in terms of having superior affinity with the solvent (S1), and enabling a combination of high levels of film formability and jetting stability to be achieved, the acetylenediol-based surfactant more preferably contains SURFYNOL 440 and/or SURFYNOL 2502, and including SURFYNOL 2502 is particularly desirable.

SURFYNOL 440 is an ethylene oxide-modified product of 2,4,7,9-tetramethyl-5-decyne-4,7-diol (in which the number of added moles of ethylene oxide is 3.5), whereas SURFYNOL 2502 is an ethylene oxide and propylene oxide-modified product of 2,4,7,9-tetramethyl-5-decyne-4,7-diol (in which the number of added moles of ethylene oxide is 5, and the number of added moles of propylene oxide is 2).

The amount of the acetylenediol-based surfactant having an HLB value of 10 or less contained within the aqueous inkjet ink of an embodiment of the present invention, relative to the total mass of the aqueous inkjet ink, is preferably within a range from 0.2 to 3.0% by mass, more preferably from 0.3 to 2.5% by mass, and particularly preferably from 0.5 to 1.5% by mass. By using the surfactant in an amount within this range, superior jetting stability, solid coverage and blocking resistance can all be achieved to a high degree.

In particular, in those cases where the aqueous inkjet ink of an embodiment of the present invention is a white ink, the amount of the acetylenediol-based surfactant having an HLB value of 10 or less, relative to the total mass of the white ink, is preferably within a range from 0.2 to 1.5% by mass, and more preferably from 0.3 to 1.0% by mass.

<<Siloxane-Based Surfactant and/or (Poly)Ethylene Glycol Monoalkyl Ether-Based Surfactant>>

In addition to the acetylenediol-based surfactant having an HLB value of 10 or less described above, the aqueous inkjet ink of an embodiment of the present invention also contains a siloxane-based surfactant and/or a (poly)ethylene glycol monoalkyl ether-based surfactant.

From the viewpoint of the compatibility with the acetylenediol-based surfactant having an HLB value of 10 or less, the total amount of the siloxane-based surfactant and/or (poly)ethylene glycol monoalkyl ether-based surfactant contained within the aqueous inkjet ink of an embodiment of the present invention, expressed relative to the total mass of the aqueous inkjet ink, is preferably within a range from 0.2 to 2.5% by mass, more preferably from 0.3 to 2.0% by mass, even more preferably from 0.6 to 2.0% by mass, and particularly preferably from 0.6 to 1.8% by mass. This total amount may be within a range from 0.6 to 2.5% by mass, or from 1.0 to 2.5% by mass. By using these surfactants in a total amount that falls within this range, superior jetting stability, solid coverage and blocking resistance can all be achieved to a high degree. This total amount of the siloxane-based surfactant and/or (poly)ethylene glycol monoalkyl ether-based surfactant represents the combined amounts of the two surfactants in those cases where both surfactants are included in the aqueous inkjet ink, or represents the amount of one surfactant in those cases where one of the two surfactants is included but the other surfactant is not included.

Furthermore, from the viewpoint of improving the jetting stability of the aqueous inkjet ink and the solid coverage of the printed matter by improving the compatibility between the surfactants as mentioned above, if the mass of the acetylenediol-based surfactant having an HLB value of 10 or less contained within the aqueous inkjet ink is deemed 1, then the value for the total mass of the siloxane-based surfactant and/or (poly)ethylene glycol monoalkyl ether-based surfactant contained within the aqueous inkjet ink is preferably controlled. In these cases, this value is preferably altered depending on the color of the ink. Specifically, in the case of a white ink, the above value is preferably within a range from 1.0 to 6.0, more preferably from 1.5 to 5.0, and particularly preferably from 1.5 to 4.0. Further, in the case of a color ink other than a white ink, the value is preferably within a range from 0.2 to 5.0, more preferably from 0.3 to 4.5, and particularly preferably from 0.4 to 4.0.

Examples of commercially available products of the above siloxane-based surfactant include BY16-201, FZ-77, FZ-2104, FZ-2110, FZ-2162, F-2123, L-7001, L-7002, SF8427, SF8428, SH3749, SH8400, 8032 Additive and SH3773M

(all manufactured by Dow Corning Toray Co., Ltd.), TEGO Glide 100, TEGO Glide 410, TEGO Glide 432, TEGO Glide 435, TEGO Glide 440, TEGO Glide 450, TEGO Twin 4000, TEGO Twin 4100, TEGO Wet 250, TEGO Wet 260, TEGO Wet 270 and TEGO Wet 280 (all manufactured by Evonik Industries AG), SAG-002 and SAG-503A (manufactured by Nissin Chemical Co., Ltd.), BYK-331, BYK-333, BYK-345, BYK-346, BYK-347, BYK-348, BYK-349, BYK-3420, BYK-UV3500, and BYK-UV3510 (all manufactured by BYK-Chemie GmbH), and KF-351A, KF-352A, KF-353, KF-354L, KF-355A, KF-6004, KF-6011, KF-6012, KF-6013, KF-6015, KF-6016, KF-6017, KF-6043, KF-615A, KF-640, KF-642, and KF-643 (all manufactured by Shin-Etsu Chemical Co., Ltd.). One of these products may be used alone, or a combination of two or more of the products may be used. Further, siloxane-based surfactants synthesized using conventionally known synthesis methods may also be used.

In those cases where the aqueous inkjet ink of an embodiment of the present invention contains a siloxane-based surfactant, from the viewpoints of ensuring superior compatibility with the acetylenediol-based surfactant having an HLB value of 10 or less and the solvent (S1), and improving the jetting stability and blocking resistance, the use of a side chain polyether-modified siloxane having 4 to 12 silicon atoms and having at least an ethylene oxide group as the surfactant is preferred.

Generally, there is a positive correlation between the molecular weight and the viscosity of siloxane-based surfactants. For example, side chain polyether-modified siloxanes that can be used favorably in the aqueous inkjet ink of an embodiment of the present invention are compounds having a dynamic viscosity at 25°C within a range from 20 to 75 $mm^2/s$. This dynamic viscosity can be measured, for example, with an Ubbelohde viscometer.

Further, examples of commercially available products of (poly)ethylene glycol monoalkyl ether-based surfactants include the EMULGEN series such as EMULGEN 104P, 105, 106, 108, 109P, 120, 123P, 150, 210, 220, 306P, 320P, and 350 (manufactured by Kao Corporation), the BLAUNON series such as BLAUNON EL-1502, 1503P, 1505P, 1507, 1509P, 1512P, 1515, 1521, 1530, 1540P, CH-302L, 305, 310L, 315L, 320L, 325L, 330L, 340, SR-702L, 705, 707, 711, 715, 720, 730, 750F, BE-5, 10, 20 and 30 (manufactured by Aoki Oil Industrial Co., Ltd.), the NONION series such as NONION K-204, 220, 230, 2100W, P-208, 210, 213, E-202, 205, 212, 215, 230, S-202, 207, 215, 220, EH-204, 208, ID-203, 206 and 209 (manufactured by NOF Corporation), the Lutensol series such as Lutensol XL40, 50, 60, 70, 80, 90, XP30, 40, 50, 60, 70, 80, 90 and 140 (manufactured by BASF Corporation), and the NEWCOL series such as NEWCOL 2302, 2303, 2305, 2308, 2310, 2320 and 2360 (manufactured by Nippon Nyukazai Co., Ltd.). One of the above products may be used alone, or a combination of two or more of the products may be used. Further, (poly)ethylene glycol monoalkyl ether-based surfactants synthesized using conventionally known synthesis methods may also be used.

In embodiments of the present invention, the term "(poly)ethylene glycol monoalkyl ether-based surfactant" corresponds with compounds in which the number of carbon atoms in the alkyl group at the molecular terminal is 6 or greater.

In one embodiment, in those cases where the aqueous inkjet ink according to an embodiment of the present invention contains a (poly)ethylene glycol monoalkyl ether-based surfactant, the use of a compound having an alkyl group (which may have branching) of 8 to 13 carbon atoms at the molecular terminal is desirable. Although the exact reasons are unclear, (poly)ethylene glycol monoalkyl ether-based surfactants having an alkyl group (which may have branching) of 8 to 13 carbon atoms at the molecular terminal exhibit superior affinity with the acetylenediol-based surfactant having an HLB value of 10 or less described above, and therefore improve the jetting stability of the inkjet ink and the solid coverage of the printed matter. For similar reasons, the number of carbon atoms in the alkyl group (which may have branching) at the molecular terminal of the (poly)ethylene glycol monoalkyl ether-based surfactant is more preferably within a range from 8 to 12, and particularly preferably from 10 to 12.

Furthermore, from the viewpoints of being able to exist stably in the aqueous inkjet ink, and providing improvements in the jetting stability, and the solid coverage and blocking resistance of the printed matter, in those cases where the aqueous inkjet ink of an embodiment of the present invention contains a (poly)ethylene glycol monoalkyl ether-based surfactant, if the number of carbon atoms in the alkyl group at the molecular terminal of the (poly)ethylene glycol monoalkyl ether-based surfactant is deemed CE, then the number of ethylene glycol groups (ethylene oxide groups) is preferably an integer included within a range from $CE\times0.8$ to $CE\times3.5$ (including the values of $CE\times0.8$ and $CE\times3.5$ when they are integers), more preferably an integer included within a range from $CE\times1.2$ to $CE\times3.2$ (including the values of $CE\times1.2$ and $CE\times3.2$ when they are integers), and particularly preferably an integer included within a range from $CE\times1.5$ to $CE\times2.7$ (including the values of $CE\times1.5$ and $CE\times2.7$ when they are integers).

<<Other Surfactants>>

The aqueous inkjet ink of an embodiment of the present invention may also contain other surfactants besides the surfactants described above (referred to as "other surfactants" in embodiments of the present invention).

Conventionally known surfactants may be used as required as these other surfactants. Among the various possibilities, the use of nonionic surfactants is preferred. Nonionic surfactants exhibit favorable affinity with the acetylenediol-based surfactant having an HLB value of 10 or less and the siloxane-based surfactant and/or (poly)ethylene

glycol monoalkyl ether-based surfactant, and do not impair the improvement in the jetting stability described above. Moreover, the use of nonionic surfactants is also favorable in terms of making it easier to obtain printed items having superior solid coverage and blocking resistance.

Examples of surfactants that may be used as the above nonionic surfactant include acetylenediol-based surfactants having an HLB value of greater than 10, acetylene monool-based surfactants, and fluorine-based surfactants and the like. Among these, in terms of exhibiting excellent affinity with the acetylenediol-based surfactant having an HLB value of 10 or less and the (di)propylene glycol monoalkyl ether-based solvent (S1), and obtaining an aqueous inkjet ink having superior jetting stability and capable of producing printed matter of excellent solid coverage and blocking resistance, the use of an acetylenediol-based surfactant having an HLB value of greater than 10 is desirable.

In those cases where an acetylenediol-based surfactant having an HLB value of greater than 10 is used, a compound synthesized using a conventionally known synthesis method may be used, or a commercially available product may be used. Examples of such commercially available products include SURFYNOL 465 and 485 (manufactured by Evonik Industries AG), and OLFINE E1010, E1020, EXP.4200 and EXP.4123 (manufactured by Nissin Chemical Co., Ltd.). One of these compounds may be used alone, or a combination of two or more compounds may be used.

The total amount of surfactants contained in the aqueous inkjet ink of an embodiment of the present invention, expressed relative to the total mass of the aqueous inkjet ink, is preferably within a range from 0.4 to 5% by mass, more preferably from 0.5 to 4% by mass, and particularly preferably from 0.6 to 3% by mass. By ensuring that the total amount of surfactants falls within this range, the jetting stability of the aqueous inkjet ink, and the blocking resistance and abrasion resistance of the printed matter can be improved.

<Other Components>

Besides the components described above, the aqueous inkjet ink of an embodiment of the present invention may also contain pH adjusters, preservatives, crosslinking agents, ultraviolet absorbers, and infrared absorbers and the like. Each of these components may use one, or two or more, conventionally known compounds.

<Method for Producing Aqueous Inkjet Ink>

The aqueous inkjet ink of an embodiment of the present invention can be produced using conventionally known methods. In one example, when a pigment is used as the colorant, the pigment is first dispersed in a medium containing at least water (an aqueous medium) using a pigment dispersing resin to produce a pigment dispersion. Subsequently, water, the binder resin, the (di)propylene glycol monoalkyl ether-based solvent (S1) represented by general formula 1, the acetylenediol-based surfactant having an HLB value of 10 or less, and the siloxane-based surfactant and/or (poly)ethylene glycol monoalkyl ether-based surfactant and the like are added to the pigment dispersion, and following thorough stirring and mixing, a technique such as filtration or centrifugation is used to remove any coarse particles. However, the method for producing the aqueous inkjet ink of an embodiment of the present invention is not limited to this particular method.

<Characteristics of Aqueous Inkjet Ink>

The aqueous inkjet ink of an embodiment of the present invention preferably has a viscosity at 25°C within a range from 3 to 15 mPa·s. Provided the viscosity falls within this range, liquid droplets of the aqueous inkjet ink can be jetted stably not only from inkjet heads having a jetting frequency of about 4 to 10 kHz, but also from inkjet heads having a high jetting frequency of about 20 to 70 kHz. In particular, when the viscosity at 25°C of the aqueous inkjet ink of an embodiment of the present invention is within a range from 4 to 10 mPa·s, the aqueous inkjet ink can be jetted in a stable manner even when using an inkjet head with a high design resolution of 600 dpi or higher. In embodiments of the present invention, viscosity values measured in an environment at 25°C using a cone-plate rotational viscometer (E-type viscometer, cone angle: 1°34') such as a TVE25L Viscometer manufactured by Toki Sangyo Co., Ltd. are used for the viscosity.

Further, in terms of obtaining an aqueous inkjet ink with superior jetting stability and excellent solid coverage for the printed matter, the static surface tension at 25°C of the aqueous inkjet ink of an embodiment of the present invention is preferably within a range from 18 to 35 mN/m, and particularly preferably from 21 to 32 mN/m. In embodiments of the present invention, the static surface tension refers to a value measured in an environment at 25°C by the Wilhelmy method (plate method) using an Automatic Surface Tension Meter CBVP-Z manufactured by Kyowa Interface Science Co., Ltd. or similar.

Furthermore, in those cases where the aqueous inkjet ink of an embodiment of the present invention contains a pigment as a colorant, in terms of achieving a combination of superior jetting stability and producing printed items with high levels of density and concealing properties, the volume-based median diameter (D50) of the pigment is preferably within a range from 30 to 450 nm, more preferably from 50 to 400 nm, and particularly preferably from 70 to 350 nm.

<Aqueous Inkjet Ink Set>

A single aqueous inkjet ink of an embodiment of the present invention may be used alone, or two or more aqueous inkjet inks may be combined and used as an aqueous inkjet ink set. Examples of this aqueous inkjet ink set include a 4-color aqueous inkjet ink set composed of a cyan aqueous inkjet ink (aqueous cyan ink), a magenta aqueous inkjet ink (aqueous magenta ink), a yellow aqueous inkjet ink (aqueous yellow ink), and a black aqueous inkjet ink (aqueous black ink) (namely, a process color ink set); and a 5-color aqueous inkjet ink set in which an aqueous white ink is added to the above process color ink set. Particularly, because the effects on the jetting stability, solid coverage and blocking resistance are particularly developed in the aqueous white ink, it is preferable to use an ink set containing an aqueous white ink that satisfies the requirements of an embodiment of the present invention described above. Moreover, it is particularly desirable that all of the aqueous inkjet inks that constitute the aqueous inkjet ink set satisfy the requirements of an embodiment of the present invention described above.

<Ink-Pretreatment Liquid Set>

Furthermore, the aqueous inkjet ink of an embodiment of the present invention and the aqueous inkjet ink set described above may also be used in combination with a pretreatment liquid containing a coagulant (an ink-pretreatment liquid set). By applying a pretreatment liquid containing a coagulant to the printing substrate prior to printing the aqueous inkjet ink, a layer (ink aggregation layer) that intentionally aggregates the solid components contained in the aqueous inkjet ink can be formed. By subsequently jetting the aqueous inkjet ink onto this ink aggregation layer, coalescence and bleeding of liquid droplets of the aqueous inkjet ink can be prevented, thereby suppressing excessive wet spreading and enabling a remarkable improvement in the print quality of the printed items, including the solid coverage.

Examples of substances that may be used as the above coagulant include water-soluble inorganic salts or organic salts containing polyvalent metal ions, and resins having cationic groups in which the equivalent weight of the cationic groups is larger than the equivalent weight of anionic groups.

<Inkjet Recording Method>

The aqueous inkjet ink according to an embodiment of the present invention is used in an inkjet printing method. In other words, the aqueous inkjet ink of an embodiment of the present invention is jetted onto a printing substrate from an inkjet head having very fine nozzles (the jetting step). Further, following jetting onto the printing substrate, the aqueous inkjet ink is preferably dried using a drying mechanism (the drying step).

<<Jetting Step>>

Examples of the operating method for the inkjet head in the jetting step include the shuttle (scan) method in which jetting and recording of the aqueous inkjet ink is performed while the inkjet head is scanned back and forth in a direction perpendicular to the transport direction of the printing substrate, and the single pass method in which jetting and recording of the aqueous inkjet ink is performed while the printing substrate is passed beneath a fixed inkjet head. The inkjet head equipped with the aqueous inkjet ink of an embodiment of the present invention may employ either the shuttle method or the single pass method. Of these possibilities, in terms of avoiding deviations in the impact positions of the aqueous inkjet ink liquid droplets, and improving the print quality of the printed items, the single pass method is preferably selected.

With regards to the inkjet head jetting method, any of the known methods may be selected as required. Examples of jetting methods that may be used include piezo methods that utilize the volume change of a piezoelectric element (piezo element), thermal methods in which the aqueous inkjet ink is jetted via gas bubbles generated by heating with a heater, and valve methods in which the pressurized aqueous inkjet ink is jetted while a nozzle cover (valve) is opened and closed with a solenoid.

In terms of reducing the drying load and improving the print quality including the solid coverage, the volume of the liquid droplets of the aqueous inkjet ink jetted from the inkjet head is preferably within a range from 0.5 to 20 picoliters, and particularly preferably from 0.5 to 15 picoliters. In terms of improving the print quality, the printing conditions (specifically, the drive frequency of the inkjet head and the number of installed inkjet heads, and the printing speed) are preferably adjusted so that the recording resolution of the printed matter is at least 600 dpi, and adjusting the printing conditions so as to achieve a resolution of at least 1,200 dpi is particularly desirable.

<<Drying Step>>

Examples of the drying method employed by the drying mechanism used in the drying step include heated drying methods, convection drying methods, infrared drying methods (for example, using infrared radiation with a wavelength of

700 to 2,500 nm), microwave drying methods, and drum drying methods.

In the drying step, one or more of these drying methods may be selected and used. Further, in those cases where two or more drying methods are employed, those drying methods may be performed separately (for example, sequentially), or may be performed simultaneously. For example, by combining a heated drying method and a convection drying method, the ink can be dried more quickly than using either of the methods alone.

In particular, from the viewpoints of preventing bumping of the liquid components in the aqueous inkjet ink, and obtaining printed items of superior print quality, in those cases where a heated drying method is employed, the drying temperature is preferably set within a range from 35 to 100°C, whereas in those cases where a convection drying method is employed, the hot air temperature is preferably set within a range from 50 to 250°C. Furthermore, for similar reasons, in those cases where an infrared drying method is employed, it is preferable that at least 50% of the integral of the total output of the irradiated infrared radiation exists within a wavelength range from 700 to 1,500 nm.

<Printing Substrate>

There are no particular limitations on the printing substrate that is printed using the aqueous inkjet ink of an embodiment of the present invention, and any known printing substrate including permeable substrates, low-permeability substrates, and impermeable substrates may be used.

In embodiments of the present invention, the permeability of the printing substrate is determined by the amount of water absorption as measured using a dynamic scanning absorption meter. Specifically, printing substrates for which the amount of absorption of pure water in a contact time of 100 msec, measured using the method described below, is less than 1 g/$m^2$ are deemed "impermeable substrates", printing substrates for which this absorption amount is at least 1 g/$m^2$ but less than 6 g/$m^2$ are deemed "low-permeability substrates", and printing substrates for which this absorption amount is at least 6 g/$m^2$ or greater are deemed "permeable substrates".

The amount of water absorption by a printing substrate can be measured using a dynamic scanning absorption meter (such as a KM500win device manufactured by Kumagai Riki Kogyo Co., Ltd.) set to the following operating conditions, using a printing substrate of about 15 to 20 cm square as a sample, in an environment of 23°C and 50%RH.

- Measurement method: Spiral method
- Measurement start radius: 20 mm
- Measurement end radius: 60 mm
- Contact time: 10 to 1,000 msec
- Sampling points: 19 (measured at substantially equal intervals relative to the square root of the contact time)
- Scanning interval: 7 mm
- Speed switching angle for rotating table: 86.3 degrees
- Head box conditions: width 5 mm, slit width 1 mm

Examples of permeable substrates include uncoated papers such as woody paper, medium-quality paper, high-quality paper, recycled paper and plain paper; fabrics such as cotton, chemical fiber products, silk, linen and nonwoven fabrics; and leathers and the like. Among these substrates, in terms of obtaining printed items of superior print quality, uncoated papers such as woody paper, medium-quality paper, high-quality paper, and recycled paper and the like can be used particularly favorably.

Further, examples of impermeable substrates and low-permeability substrates include plastic substrates of polyvinyl chloride, polyethylene terephthalate (PET), polypropylene, polyethylene, nylon, polystyrene, and polyvinyl alcohol and the like; coated papers such as coated paper, art paper, finely coated paper, and cast paper; metals such as aluminum, iron, stainless steel, and titanium; and glass.

The printing substrates exemplified above may have a smooth surface, or have some surface unevenness. Further, the printing substrate may be transparent, semi-transparent, or opaque. Moreover, the printing substrate may be in a rolled form or sheet-like form. In addition, a substrate prepared by bonding together two or more of the printing substrates listed above may also be used as the printing substrate. Further, a peelable adhesive layer or the like may be provided on the opposite side from the printing surface, or an adhesive layer or the like may be provided on the printed surface following printing.

In terms of improving the wet spreadability of the aqueous inkjet ink of an embodiment of the present invention, and obtaining printed items having superior print quality and drying properties, together with good uniformity and abrasion resistance of the printed matter surface and favorable substrate adhesion, the print surface of the printing substrate described above is preferably subjected to a surface modification treatment such as a corona treatment or a plasma treatment.

<Printed Item>

A printed item according to an embodiment of the present invention is produced by printing the aqueous inkjet ink of an embodiment of the present invention onto a printing substrate. The printed item of an embodiment of the present invention may have a printing substrate and a printed layer produced by printing the aqueous inkjet ink, and may also have an ink aggregation layer. For example, the printed item of an embodiment of the present invention may have a printing substrate, and a printed layer formed on the printing substrate. Alternatively, the printed item of an embodiment of the present invention may have a printing substrate, an ink aggregation layer formed on the printing substrate, and a printed layer formed on the ink aggregation layer.

<Examples of Embodiments>

Embodiments of the present invention relate to, for example, the aqueous inkjet inks described below in [1] to [11], and the method for producing a printed item using one of the aqueous inkjet inks described below in [12].

[1] An aqueous inkjet ink containing a colorant, a resin, a water-soluble organic solvent, and a surfactant, wherein

the Tg value for the resin is within a range from 50 to 130°C,
the water-soluble organic solvent contains a (di)propylene glycol monoalkyl ether-based solvent (S1) represented by a general formula 1 shown below, and
the surfactant contains an acetylenediol-based surfactant having an HLB value of 10 or less, and a siloxane-based surfactant and/or (poly)ethylene glycol monoalkyl ether-based surfactant.

General formula 1: $R^1\text{-}(O\text{-}CH(CH_3)\text{-}CH_2)_n\text{-}OH$

(In general formula 1, $R^1$ represents an alkyl group of 2 to 4 carbon atoms, and n represents 1 or 2.)

[2] The aqueous inkjet ink according to [1], also containing a water-soluble organic solvent (S2) having an SP value within a range from 12 to 14 $(cal/cm^3)^{1/2}$.
[3] The aqueous inkjet ink according to [2], wherein the water-soluble organic solvent (S2) having an SP value within a range from 12 to 14 $(cal/cm^3)^{1/2}$ contains an alkanediol of 3 to 5 carbon atoms.
[4] The aqueous inkjet ink according to any one of [1] to [3], wherein the (di)propylene glycol monoalkyl ether-based solvent (S1) contains dipropylene glycol monopropyl ether.
[5] The aqueous inkjet ink according to any one of [1] to [4], wherein the amount of the acetylenediol-based surfactant having an HLB value of 10 or less is within a range from 0.5 to 1.5% by mass of the aqueous inkjet ink.
[6] The aqueous inkjet ink according to any one of [1] to [5], wherein the total amount of the siloxane-based surfactant and/or (poly)ethylene glycol monoalkyl ether-based surfactant is within a range from 0.6 to 2.5% by mass of the aqueous inkjet ink.
[7] The aqueous inkjet ink according to any one of [1] to [5], wherein the total amount of the siloxane-based surfactant and/or (poly)ethylene glycol monoalkyl ether-based surfactant is within a range from 0.6 to 2.0% by mass of the aqueous inkjet ink.
[8] The aqueous inkjet ink according to any one of [1] to [5], wherein the total amount of the siloxane-based surfactant and/or (poly)ethylene glycol monoalkyl ether-based surfactant is within a range from 0.6 to 1.8% by mass of the aqueous inkjet ink.
[9] The aqueous inkjet ink according to any one of [1] to [4], wherein the amount of the acetylenediol-based surfactant having an HLB value of 10 or less is within a range from 0.5 to 1.5% by mass of the aqueous inkjet ink, and the total amount of the siloxane-based surfactant and (poly)ethylene glycol monoalkyl ether-based surfactant is within a range from 1.0 to 2.5% by mass of the aqueous inkjet ink.
[10] The aqueous inkjet ink according to any one of [1] to [9], wherein the water-soluble organic solvent contains dipropylene glycol monopropyl ether, and also contains at least one compound selected from the group consisting of propylene glycol monomethyl ether, propylene glycol monoethyl ether, propylene glycol monopropyl ether, and propylene glycol monobutyl ether.
[11] The aqueous inkjet ink according to any one of [1] to [10], wherein the ratio of the mass of the resin having a glass transition temperature within a range from 50 to 130°C relative to the mass of the (di)propylene glycol monoalkyl ether-based solvent (S1) is within a range from 0.5 to 12.5.
[12] A printed item, obtained by printing the aqueous inkjet ink according to any one of [1] to [11] onto a printing substrate.

By using the aqueous inkjet ink according to an embodiment of the present invention, the jetting stability is superior, and printed items having excellent solid coverage and blocking resistance can be obtained. In one embodiment of the present invention, in addition to the characteristics described above, a printed item that also exhibits excellent abrasion resistance can be obtained. Moreover, in one embodiment of the present invention, a printed item having excellent solid coverage and blocking resistance can be obtained.
The present invention is related to the subject matter disclosed in prior Japanese Application 2023-166390 filed on September 27, 2023, the entire content of which is incorporated by reference herein.

EXAMPLES

The aqueous inkjet ink of embodiments of the present invention is described below in further detail using a series of examples and comparative examples. In the following description, unless specifically stated otherwise, the units "parts" and "%" represent "parts by mass" and "% by mass" respectively.

<Production Example for Resin 1>

A reaction vessel fitted with a gas inlet tube, a thermometer, a condenser and a stirrer was charged with 72.4 parts of 2-butanone, and the interior of the vessel was flushed with nitrogen gas. The inside of the reaction vessel was then heated to 80°C, and a mixture of 10 parts of styrene, 10 parts of methacrylic acid, 25 parts of butyl acrylate, 40 parts of methyl methacrylate and 15 parts of stearyl methacrylate as polymerizable monomers, and 4 parts of a polymerization initiator V-601 (manufactured by FUJIFILM Wako Pure Chemical Corporation) was added dropwise to the reaction vessel over a period of two hours. Following completion of the dropwise addition, reaction was continued for 3 hours at 80°C, an additional 0.6 parts of the V-601 was then added, and the reaction was continued for a further two hours at 80°C, thus obtaining a solution of a resin 1.
Following cooling of the solution of the resin 1 to 50°C, 10.3 parts of dimethylaminoethanol was added to neutralize the carboxyl groups, and 140 parts of water was then added. Subsequently, the solution was heated to at least 78°C to remove the 2-butanone by azeotropic distillation with water, and the solid fraction concentration was adjusted to 30%, thus obtaining an aqueous solution of the resin 1 (solid fraction: 30% by mass).
The weight average molecular weight of the resin 1, measured using a GPC apparatus (HLC-8120GPC manufactured by Tosoh Corporation) fitted with a TSKgel column (manufactured by Tosoh Corporation) and an RI detector, and using THF as the developing solvent, was about 14,000. Further, the acid value for the resin 1, calculated using the above formula 3, was 65.2 (mgKOH/g). Furthermore, the glass transition temperature (Tg) of the resin 1 calculated using the above formula 2 was 39.7°C.
In embodiments of the present invention, the term "aqueous solution" means a solution containing an aqueous medium and one or more components dispersed and/or dissolved in the aqueous medium.

<Production Examples for Resins 2 to 4>

With the exception of altering the types and amounts used of the polymerizable monomers, aqueous solutions of resins 2 to 4 (each having a solid fraction of 30%) were produced in the same manner as the resin 1.

[Table 1]

| Resin No. | | Resin 1 | Resin 2 | Resin 3 | Resin 4 |
|---|---|---|---|---|---|
| Polymerizable monomers | MAA | 10 | 10 | 10 | 10 |
| | BA | 25 | 15 | | |
| | MMA | 40 | 50 | 65 | 65 |
| | STMA | 15 | 15 | 15 | |
| | St | 10 | 10 | 10 | 25 |
| Total mass | | 100 | 100 | 100 | 100 |
| Parameters | Weight average molecular weight (Mw) | 14,000 | 15,000 | 13,000 | 14,000 |
| | Acid value (mgKOH/g) | 65.2 | 65.2 | 65.2 | 65.2 |
| | Glass transition temperature (°C) | 39.7 | 59.7 | 94.9 | 106.1 |

The meanings of the abbreviations used in Table 1 are as follows.

- MAA: methacrylic acid
- BA: butyl acrylate
- MMA: methyl methacrylate
- STMA: stearyl methacrylate
- St: styrene

<Production Example for Resin 5 (A-B Block Polymer)>

A reaction vessel fitted with a gas inlet tube, a thermometer, a condenser and a stirrer was charged with 20 parts of 2-butanone, polymerizable monomers including 10.0 parts of methacrylic acid as an ethylenic unsaturated monomer having an acid group and 10.0 parts of methyl methacrylate as another ethylenic unsaturated monomer, and 0.9 parts of 2,2'-azobisisobutyronitrile and 3.6 parts of 2-(dodecylthiocarbonothioylthio)-isobutyric acid as polymerization initiators. Following flushing of the interior of the reaction vessel with nitrogen gas, the temperature was raised to 75°C and a polymerization reaction was conducted for three hours, yielding a copolymer (block A) formed from methacrylic acid and methyl methacrylate.

Following completion of the above polymerization reaction, the reaction system was cooled to ambient temperature, and 60 parts of 2-butanone, and 55 parts of methyl methacrylate and 25 parts of styrene as polymerizable monomers were added to the reaction vessel. Following flushing of the interior of the reaction vessel with nitrogen gas, the temperature was raised to 75°C and a polymerization reaction was conducted for three hours, yielding a resin 5 having an A-B block structure in which a copolymer (block B) formed from methyl methacrylate and styrene had been added to the above block A.

Subsequently, following cooling of the reaction system to ambient temperature, 10.3 parts of dimethylaminoethanol was added to the reaction vessel to neutralize the product, and 200 parts of water was then added. The thus obtained solution was then heated to remove the 2-butanone by azeotropic distillation with water, and the solid fraction concentration was adjusted to 30%, thus obtaining an aqueous solution of the resin 5.

The weight average molecular weight of the resin 5, measured in the same manner as that of the resin 1, was about 15,000. Further, the acid value for the resin 5, calculated using the above formula 3, was 65.2 (mgKOH/g). Furthermore, the glass transition temperature (Tg) of the resin 5 calculated using the above formula 2 was 106.1°C.

<Synthesis of Acetylenediol Compounds 1 and 2>

Acetylenediol-based surfactants 1 and 2 were synthesized by using the method disclosed in Example 6 of JP 2001-215690 A and adjusting the amounts of ethylene oxide and propylene oxide used. The structures and HLB values for the acetylenediol-based surfactants 1 and 2 were as shown below in Table 2. The acetylenediol-based surfactant 1 is a compound of general formula 6 shown below in which $R^2$ represents a methyl group, $R^3$ represents an isobutyl group, x1+y1 is 6, x2+y2 is 1, and the ethylene oxide groups and propylene oxide groups are added randomly.

General formula 6:

[Chemical formula 1]

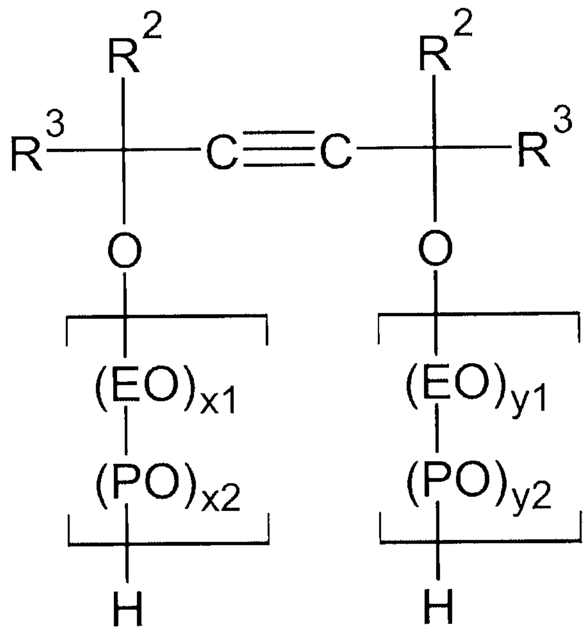

[Table 2]

| Acetylenediol-based surfactant No. | Structures within general formula 6 | | | | HLB value |
|---|---|---|---|---|---|
| | $R^2$ | $R^3$ | x1+y1 | x2+y2 | |
| 1 | methyl group | isobutyl group | 6 | 1 | 9.6 |
| 2 | methyl group | isobutyl group | 8 | 1 | 11.1 |

<Production Example for White Pigment Dispersion>

A mixing vessel (capacity: 10 L) fitted with a stirrer was charged with 3,000 g of titanium oxide (TIPAQUE CR-60, manufactured by Ishihara Sangyo Kaisha, Ltd.), 300 g of a resin 6 (a random polymer of styrene/acrylic acid/behenyl methacrylate = 45/30/25 (mass ratio) in which all acid groups have been neutralized with dimethylaminoethanol, acid value: 233.6 mgKOH/g, weight average molecular weight: 18,000), and 2,700 g of water, and stirring (premixing) was conducted for one hour. Subsequently, circulating dispersion of the mixture was started using a Dyno-Mill (capacity: 0.6 L) manufactured by Shinmaru Enterprises Corporation filled with 1,800 g of zirconia beads of diameter 0.5 mm. After a prescribed period (for example, after each hour), the D50 value of the mixture was measured using the apparatus described above, and the circulating dispersion was halted once the D50 value fell to 240 nm or less, thus completing production of a white pigment dispersion.

<Production Example for Black Pigment Dispersion>

A mixing vessel (capacity: 10 L) fitted with a stirrer was charged with 450 g of carbon black (PrinteX 85, manufactured by Orion Engineered Carbons S.A.), 90 g of a resin 7 (a random polymer of styrene/acrylic acid/behenyl methacrylate = 45/25/30 (mass ratio) in which all acid groups have been neutralized with dimethylaminoethanol, acid value: 194.6 mgKOH/g, weight average molecular weight: 20,000), and 2,460 g of water, and premixing was conducted for one hour. Subsequently, circulating dispersion of the mixture was started using a Dyno-Mill (capacity: 0.6 L) manufactured by Shinmaru Enterprises Corporation filled with 1,800 g of zirconia beads of diameter 0.5 mm. After a prescribed period (for example, after each hour), the D50 value of the mixture was measured using the apparatus described above, and the circulating dispersion was halted once the D50 value fell to 120 nm or less, thus completing production of a black pigment

dispersion.

<Production of Aqueous Inkjet Inks 1 to 162>

Using the pigment dispersions produced by the methods described above, a mixing vessel fitted with a stirrer was charged with various raw materials to achieve the blend formulation shown in each of the columns of Table 3 below. Following addition of all the raw materials, each mixture was heated to 50°C and mixed for a further one hour, and each of the resulting mixtures was then filtered through a membrane filter with a pore size of 0.8 μm, thus completing production of aqueous inkjet inks 1 to 162.

During production of the aqueous inkjet inks, each of the raw materials was added while the mixture inside the mixing vessel was constantly stirred. Further, for each column in Table 3, the components were added in sequence beginning with the component shown in the uppermost row and working downward. However, in the case of the production of an aqueous inkjet ink that does not contain one or more of the these components, that component is not added, and the next component in the sequence was added. Furthermore, in the case of a component which contained two or more raw materials, the order in which the materials were added within that component was random.

[Table 3]

| Aqueous inkjet ink No. | | | | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|
| Water | | | | | 24.95 | 24.95 | 24.95 | 24.95 | 24.95 | 24.95 | 24.95 | 24.95 | 24.95 | 24.95 | 34.95 | 34.95 | 24.95 | 34.95 | 34.95 |
| Water-soluble organic solvents | (Di)propylene glycol monoalkyl ether-based solvent (S1) | | PnP | | | | | | | | 3 | | | | | | | | |
| | | | DPnP | | 3 | 3 | 3 | 3 | 3 | 3 | 3 | 3 | 3 | 3 | 3 | 3 | 3 | 3 | 3 |
| | | | PnB | | | | | | | | | 3 | | | | | | | |
| | | | DPnB | | | | | | | | | | | 3 | | | | | |
| | Water-soluble organic solvent (S2) with SP value of 12 to 14 | Alkanediol of 3 to 5 carbon atoms | 1,5-PenD | SP=12.4 | | | | | | | | | | | | | | | |
| | | | 1,2-BD | SP=12.8 | | | | | | | | | | | | | | | |
| | | | 1,3-BD | SP=12.8 | | | | | | | | | | | | | | | |
| | | | 1,2-PD | SP=13.5 | 15 | 15 | 12 | 15 | 12 | 15 | 12 | 12 | 12 | 12 | 15 | 12 | 15 | 15 | 12 |
| | | | 1,3-PD | SP=13.7 | | | | | | | | | | | | | | | |
| | | Other | DEG | SP=13.0 | | | | | | | | | | | | | | | |
| | | | EtOH | SP=12.6 | | | | | | | | | | | | | | | |
| | Other water-soluble organic solvent | | EG | | | | | | | | | | | | | | | | |
| | | | 1,2-HexD | | | | | | | | | | | | | | | | |
| | | | BDG | | | | | | | | | | | | | | | | |
| | | | PGM | | | | 3 | | 3 | | | | | | | 3 | | | 3 |
| | | | DPM | | | | | | | | | | 3 | | | | | | |
| Surfactants | Acetylenediol-based surfactant with HLB value of 10 or less | | SF104 | HLB=3 | | | | | | | | | | | | | | | |
| | | | SF420 | HLB=4 | | | | | | | | | | | | | | | |
| | | | SF2502 | HLB=8 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | SF440 | HLB=8.1 | | | | | | | | | | | | | | | |
| | | | Acetylenediol compound 1 | HLB=9.6 | | | | | | | | | | | | | | | |
| | Acetylenediol-based surfactant with HLB value greater than 10 | | Acetylenediol compound 2 | HLB=11.1 | | | | | | | | | | | | | | | |
| | Siloxane-based surfactant | | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | | TW270 | | | | | | | | | | | | | | | | |
| | | | KF642 | | | | | | | | | | | | | | | | |
| | | | KF3551A | | | | | | | | | | | | | | | | |
| | | | BYK-3420 | | | | | | | | | | | | | | | | |
| | (Poly)ethylene glycol monoalkyl ether-based surfactant | Terminal alkyl carbon number (CE):8 | Nonion EH-208 | EO groups: 8(CE×1.0) | | | | | | | | | | | | | | | |
| | | Terminal alkyl carbon number (CE):10 | Lutensol XP40 | EO groups: 4(CE×0.4) | | | | | | | | | | | | | | | |
| | | | Lutensol XP80 | EO groups: 8(CE×0.8) | | | | | | | | | | | | | | | |
| | | | Lutensol XP140 | EO groups: 14(CE×1.4) | | | | | | | | | | | | | | | |
| | | Terminal alkyl carbon number (CE):12 | Blaunon EL-1509P | EO groups: 9(CE×0.8) | | | | | | | | | | | | | | | |
| | | | Blaunon EL-1512P | EO groups: 12(CE×1.0) | | | | | | | | | | | | | | | |
| | | | Blaunon EL-1515 | EO groups: 15(CE×1.3) | | | | | | | | | | | | | | | |
| | | | Blaunon EL-1521 | EO groups: 21(CE×1.8) | | | | | | | | | | | | | | | |
| | | | Blaunon EL-1530 | EO groups: 30(CE×2.5) | | | | | | | | | | | | | | | |
| | | | Blaunon EL-1540P | EO groups: 40(CE×3.3) | | | | | | | | | | | | | | | |
| | | Terminal alkyl carbon number (CE):12 to 13 | Newcol 2303 | EO groups: 3(CE×0.2 to 0.3) | | | | | | | | | | | | | | | |
| | | | Newcol 2320 | EO groups: 20(CE×1.5 to 1.7) | | | | | | | | | | | | | | | |
| | | Terminal alkyl carbon number (CE):18 | Blaunon SR-720 | EO groups: 20(CE×1.1) | | | | | | | | | | | | | | | |
| | | | Blaunon SR-730 | EO groups: 30(CE×1.7) | | | | | | | | | | | | | | | |
| | | | Blaunon SR-750F | EO groups: 50(CE×2.8) | | | | | | | | | | | | | | | |
| Resins | | | Resin 1 | Tg=39.7°C | 15 | | | | | | | | | | | | | | |
| | | | Resin 2 | Tg=59.7°C | | 15 | 15 | | | | | | | | | | | | |
| | | | Resin 3 | Tg=94.9°C | | | | 15 | 15 | | | | | | | | | | |
| | | | Resin 4 | Tg=106.1°C | | | | | | 15 | 15 | 15 | 15 | 15 | 15 | 15 | | 5 | 5 |
| | | | Resin 5 | Tg=106.1°C | | | | | | | | | | | | | 15 | | |
| Pigment dispersion | Type | | | | white | white | white | white | white | white | white | white | white | white | black | black | white | white | white |
| | Blend amount | | | | 40 | 40 | 40 | 40 | 40 | 40 | 40 | 40 | 40 | 40 | 30 | 30 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 15 | 15 | 12 | 15 | 12 | 15 | 12 | 12 | 12 | 12 | 15 | 12 | 15 | 15 | 12 |
| | Amount of resin with Tg of 50 to 130°C | | | | 0 | 4.5 | 4.5 | 4.5 | 4.5 | 4.5 | 4.5 | 4.5 | 4.5 | 4.5 | 4.5 | 4.5 | 4.5 | 1.5 | 1.5 |
| Specs | Amount of resin with Tg of 50 to 130°C relative to amount of solvent (S1) | | | | 0 | 1.5 | 1.5 | 1.5 | 1.5 | 1.5 | 0.75 | 0.75 | 1.5 | 0.8 | 1.5 | 1.5 | 1.5 | 0.50 | 0.50 |
| | Amount of siloxane-based surfactant / (poly)ethylene glycol monoalkyl ether-based surfactant relative to amount of acetylenediol-based surfactant with HLB value greater than 10 | | | | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Amount of alkanediol of 3 to 5 carbon atoms relative to amount of solvent (S1) | | | | 5.0 | 5.0 | 4.0 | 5.0 | 4.0 | 5.0 | 2.0 | 2.0 | 4.0 | 2.0 | 5.0 | 4.0 | 5.0 | 5.0 | 4.0 |
| | Amount of DPnP relative to total amount of PGM, PnP and PnB | | | | --- | --- | 1.0 | --- | 1.0 | --- | 1.0 | 1.0 | --- | --- | --- | 1.0 | --- | --- | 1.0 |

[Table 3 continued]

| Aqueous inkjet ink No. | | | | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|---|---|
| Water | | | | 19.95 | 19.95 | 38.95 | 38.95 | 34.45 | 34.45 | 30.95 | 32.95 | 32.95 | 2.95 | 2.95 | 2.95 | 2.95 | 0.95 | 0.95 |
| Water-soluble organic solvents | (Di)propylene glycol monoalkyl ether-based solvent (S1) | PnP | | | | | | | | | | | | | | | | |
| | | DPnP | | 3 | 3 | 3 | 3 | 3 | 3 | 3 | 3 | 3 | 3 | 3 | 3 | 3 | 3 | 3 |
| | | PnB | | | | | | | | | | | | | | | | |
| | | DPnB | | | | | | | | | | | | | | | | |
| | Water-soluble organic solvent (S2) with SP value of 12 to 14 / Alkanediol of 3 to 5 carbon atoms | 1,5-PenD | SP=12.4 | | | | | | | | | | | | | | | |
| | | 1,2-BD | SP=12.8 | | | | | | | | | | | | | | | |
| | | 1,3-BD | SP=12.8 | | | | | | | | | | | | | | | |
| | | 1,2-PD | SP=13.5 | 15 | 12 | 15 | 12 | 15 | 12 | 15 | 15 | 12 | 15 | 12 | 10 | 7 | 10 | 7 |
| | | 1,3-PD | SP=13.7 | | | | | | | | | | | | | | | |
| | Water-soluble organic solvent (S2) with SP value of 12 to 14 / Other | DEG | SP=13.0 | | | | | | | | | | | | | | | |
| | | EtOH | SP=12.6 | | | | | | | | | | | | | | | |
| | Other water-soluble organic solvent | EG | | | | | | | | | | | | | | | | |
| | | 1,2-HexD | | | | | | | | | | | | | | | | |
| | | BDG | | | | | | | | | | | | | | | | |
| | | PGM | | | 3 | | 3 | | 3 | | | 3 | | 3 | | 3 | | 3 |
| | | DPM | | | | | | | | | | | | | | | | |
| Surfactants | Acetylenediol-based surfactant with HLB value of 10 or less | SF104 | HLB=3 | | | | | | | | | | | | | | | |
| | | SF420 | HLB=4 | | | | | | | | | | | | | | | |
| | | SF2502 | HLB=8 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | SF440 | HLB=8.1 | | | | | | | | | | | | | | | |
| | | Acetylenediol compound 1 | HLB=9.6 | | | | | | | | | | | | | | | |
| | Acetylenediol-based surfactant with HLB value greater than 10 | Acetylenediol compound 2 | HLB=11.1 | | | | | | | | | | | | | | | |
| | Siloxane-based surfactant | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | TW270 | | | | | | | | | | | | | | | | |
| | | KF642 | | | | | | | | | | | | | | | | |
| | | KF3551A | | | | | | | | | | | | | | | | |
| | | BYK-3420 | | | | | | | | | | | | | | | | |
| | (Poly)ethylene glycol monoalkyl ether-based surfactant / Terminal alkyl carbon number (CE):8 | Nonion EH-208 | EO groups: 8(CE×1.0) | | | | | | | | | | | | | | | |
| | (Poly)ethylene glycol monoalkyl ether-based surfactant / Terminal alkyl carbon number (CE):10 | Lutensol XP40 | EO groups: 4(CE×0.4) | | | | | | | | | | | | | | | |
| | | Lutensol XP80 | EO groups: 8(CE×0.8) | | | | | | | | | | | | | | | |
| | | Lutensol XP140 | EO groups: 14(CE×1.4) | | | | | | | | | | | | | | | |
| | (Poly)ethylene glycol monoalkyl ether-based surfactant / Terminal alkyl carbon number (CE):12 | Blaunon EL-1509P | EO groups: 9(CE×0.8) | | | | | | | | | | | | | | | |
| | | Blaunon EL-1512P | EO groups: 12(CE×1.0) | | | | | | | | | | | | | | | |
| | | Blaunon EL-1515 | EO groups: 15(CE×1.3) | | | | | | | | | | | | | | | |
| | | Blaunon EL-1521 | EO groups: 21(CE×1.8) | | | | | | | | | | | | | | | |
| | | Blaunon EL-1530 | EO groups: 30(CE×2.5) | | | | | | | | | | | | | | | |
| | | Blaunon EL-1540P | EO groups: 40(CE×3.3) | | | | | | | | | | | | | | | |
| | (Poly)ethylene glycol monoalkyl ether-based surfactant / Terminal alkyl carbon number (CE):12 to 13 | Newcol 2303 | EO groups: 3(CE×0.2 to 0.3) | | | | | | | | | | | | | | | |
| | | Newcol 2320 | EO groups: 20(CE×1.5 to 1.7) | | | | | | | | | | | | | | | |
| | (Poly)ethylene glycol monoalkyl ether-based surfactant / Terminal alkyl carbon number (CE):18 | Blaunon SR-720 | EO groups: 20(CE×1.1) | | | | | | | | | | | | | | | |
| | | Blaunon SR-730 | EO groups: 30(CE×1.7) | | | | | | | | | | | | | | | |
| | | Blaunon SR-750F | EO groups: 50(CE×2.8) | | | | | | | | | | | | | | | |
| Resins | | Resin 1 | Tg=39.7°C | | | | | | | | | | | | | | | |
| | | Resin 2 | Tg=59.7°C | | | | | | | | | | | | | | | |
| | | Resin 3 | Tg=94.9°C | | | | | | | | | | | | | | | |
| | | Resin 4 | Tg=106.1°C | 20 | 20 | 1 | 1 | 5.5 | 5.5 | 7 | 7 | 7 | 37 | 37 | 42 | 42 | 44 | 44 |
| | | Resin 5 | Tg=106.1°C | | | | | | | | | | | | | | | |
| Pigment dispersion | Type | | | white | white | white | white | white | white | white | white | white | white | white | white | white | white | white |
| | Blend amount | | | 40 | 40 | 40 | 40 | 40 | 40 | 40 | 40 | 40 | 40 | 40 | 40 | 40 | 40 | 40 |
| Other component | Preservative | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | 15 | 12 | 15 | 12 | 15 | 12 | 15 | 15 | 12 | 15 | 12 | 10 | 7 | 10 | 7 |
| | Amount of resin with Tg of 50 to 130°C | | | 6.0 | 6.0 | 0.3 | 0.3 | 1.65 | 1.65 | 2.1 | 2.1 | 2.1 | 11.1 | 11.1 | 12.6 | 12.6 | 13.2 | 13.2 |
| Specs | Amount of resin with Tg of 50 to 130°C relative to amount of solvent (S1) | | | 2.0 | 2.0 | 0.10 | 0.10 | 0.55 | 0.55 | 0.42 | 0.70 | 0.70 | 3.7 | 3.7 | 4.2 | 4.2 | 4.4 | 4.4 |
| | Amount of siloxane-based surfactant / (poly)ethylene glycol monoalkyl ether-based surfactant relative to amount of acetylenediol-based surfactant with HLB value greater than 10 | | | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Amount of alkanediol of 3 to 5 carbon atoms relative to amount of solvent (S1) | | | 5.0 | 4.0 | 5.0 | 4.0 | 5.0 | 4.0 | 3.0 | 5.0 | 4.0 | 5.0 | 4.0 | 3.3 | 2.3 | 3.3 | 2.3 |
| | Amount of DPnP relative to total amount of PGM, PnP and PnB | | | --- | 1.0 | --- | 1.0 | --- | 1.0 | --- | --- | 1.0 | --- | 1.0 | --- | 1.0 | --- | 1.0 |

[Table 3 continued]

| Aqueous inkjet ink No. | | | | | 31 | 32 | 33 | 34 | 35 | 36 | 37 | 38 | 39 | 40 | 41 | 42 | 43 | 44 | 45 |
|---|---|---|---|---|---|---|---|---|---|---|---|---|---|---|---|---|---|---|---|
| Water | | | | | 6.95 | 3.95 | 7.95 | 4.95 | 24.95 | 24.95 | 34.95 | 24.95 | 24.95 | 24.95 | 24.95 | 24.95 | 24.95 | 24.95 | 27.45 |
| Water-soluble organic solvents | (Di)propylene glycol monoalkyl ether-based solvent (S1) | | PnP | | | | | | | | | | | | | | | | |
| | | | DPnP | | 3 | 3 | 2 | 2 | 3 | 3 | 3 | 3 | 3 | 3 | 3 | 3 | 3 | 3 | 3 |
| | | | PnB | | | | | | | | | | | | | | | | |
| | | | DPnB | | | | | | | | | | | | | | | | |
| | Water-soluble organic solvent (S2) with SP value of 12 to 14 | Alkanediol of 3 to 5 carbon atoms | 1,5-PenD | SP=12.4 | | | | | 15 | | | | | | | | | | |
| | | | 1,2-BD | SP=12.8 | | | | | | 15 | 15 | | | | | 5 | | | |
| | | | 1,3-BD | SP=12.8 | | | | | | | | 15 | | | | | | | |
| | | | 1,2-PD | SP=13.5 | 10 | 10 | 10 | 10 | | | | | | | | | 10 | | 12 |
| | | | 1,3-PD | SP=13.7 | | | | | | | | | 15 | | | | | | |
| | | Other | DEG | SP=13.0 | | | | | | | | | | 10 | | | | | |
| | | | EtOH | SP=12.6 | | | | | | | | | | 5 | | | | | |
| | Other water-soluble organic solvent | | EG | | | | | | | | | | | | 15 | | | | |
| | | | 1,2-HexD | | | | | | | | | | | | | 2.5 | 5 | | |
| | | | BDG | | | | | | | | | | | | | | | 15 | |
| | | | PGM | | | 3 | | 3 | | | | | | | | 7.5 | | | 0.5 |
| | | | DPM | | | | | | | | | | | | | | | | |
| Surfactants | Acetylenediol-based surfactant with HLB value of 10 or less | | SF104 | HLB=3 | | | | | | | | | | | | | | | |
| | | | SF420 | HLB=4 | | | | | | | | | | | | | | | |
| | | | SF2502 | HLB=8 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | SF440 | HLB=8.1 | | | | | | | | | | | | | | | |
| | | | Acetylenediol compound 1 | HLB=9.6 | | | | | | | | | | | | | | | |
| | Acetylenediol-based surfactant with HLB value greater than 10 | | Acetylenediol compound 2 | HLB=11.1 | | | | | | | | | | | | | | | |
| | Siloxane-based surfactant | | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | | TW270 | | | | | | | | | | | | | | | | |
| | | | KF642 | | | | | | | | | | | | | | | | |
| | | | KF3551A | | | | | | | | | | | | | | | | |
| | | | BYK-3420 | | | | | | | | | | | | | | | | |
| | (Poly)ethylene glycol monoalkyl ether-based surfactant | Terminal alkyl carbon number (CE):8 | Nonion EH-208 | EO groups: 8(CE×1.0) | | | | | | | | | | | | | | | |
| | | Terminal alkyl carbon number (CE):10 | Lutensol XP40 | EO groups: 4(CE×0.4) | | | | | | | | | | | | | | | |
| | | | Lutensol XP80 | EO groups: 8(CE×0.8) | | | | | | | | | | | | | | | |
| | | | Lutensol XP140 | EO groups: 14(CE×1.4) | | | | | | | | | | | | | | | |
| | | Terminal alkyl carbon number (CE):12 | Blaunon EL-1509P | EO groups: 9(CE×0.8) | | | | | | | | | | | | | | | |
| | | | Blaunon EL-1512P | EO groups: 12(CE×1.0) | | | | | | | | | | | | | | | |
| | | | Blaunon EL-1515 | EO groups: 15(CE×1.3) | | | | | | | | | | | | | | | |
| | | | Blaunon EL-1521 | EO groups: 21(CE×1.8) | | | | | | | | | | | | | | | |
| | | | Blaunon EL-1530 | EO groups: 30(CE×2.5) | | | | | | | | | | | | | | | |
| | | | Blaunon EL-1540P | EO groups: 40(CE×3.3) | | | | | | | | | | | | | | | |
| | | Terminal alkyl carbon number (CE):12 to 13 | Newcol 2303 | EO groups: 3(CE×0.2 to 0.3) | | | | | | | | | | | | | | | |
| | | | Newcol 2320 | EO groups: 20(CE×1.5 to 1.7) | | | | | | | | | | | | | | | |
| | | Terminal alkyl carbon number (CE):18 | Blaunon SR-720 | EO groups: 20(CE×1.1) | | | | | | | | | | | | | | | |
| | | | Blaunon SR-730 | EO groups: 30(CE×1.7) | | | | | | | | | | | | | | | |
| | | | Blaunon SR-750F | EO groups: 50(CE×2.8) | | | | | | | | | | | | | | | |
| Resins | | | Resin 1 | Tg=39.7°C | | | | | | | | | | | | | | | |
| | | | Resin 2 | Tg=59.7°C | | | | | | | | | | | | | | | |
| | | | Resin 3 | Tg=94.9°C | | | | | | | | | | | | | | | |
| | | | Resin 4 | Tg=106.1°C | 48 | 48 | 48 | 48 | 15 | 15 | 15 | 15 | 15 | 15 | 15 | 15 | 15 | 15 | 15 |
| | | | Resin 5 | Tg=106.1°C | | | | | | | | | | | | | | | |
| Pigment dispersion | Type | | | | black | black | black | black | white | white | black | white | white | white | white | white | white | white | white |
| | Blend amount | | | | 30 | 30 | 30 | 30 | 40 | 40 | 30 | 40 | 40 | 40 | 40 | 40 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 10 | 10 | 10 | 10 | 15 | 15 | 15 | 15 | 15 | 15 | 0 | 5 | 10 | 0 | 12 |
| | Amount of resin with Tg of 50 to 130°C | | | | 14.4 | 14.4 | 14.4 | 14.4 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | | 4.8 | 4.8 | 7.2 | 7.2 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Amount of alkanediol of 3 to 5 carbon atoms relative to amount of solvent (S1) | | | | 3.3 | 3.3 | 5.0 | 5.0 | 5.0 | 5.0 | 5.0 | 5.0 | 5.0 | 0 | 0 | 1.7 | 3.3 | 0 | 4.0 |
| | Amount of DPnP relative to total amount of PGM, PnP and PnB | | | | --- | 1.0 | --- | 0.67 | --- | --- | --- | --- | --- | --- | --- | 0.40 | --- | --- | 6.0 |

[Table 3 continued]

| Aqueous inkjet ink No. | | | | 46 | 47 | 48 | 49 | 50 | 51 | 52 | 53 | 54 | 55 | 56 | 57 | 58 | 59 | 60 |
|---|---|---|---|---|---|---|---|---|---|---|---|---|---|---|---|---|---|---|
| Water | | | | 36.95 | 34.95 | 24.95 | 34.95 | 24.95 | 34.95 | 34.95 | 36.95 | 17.95 | 27.95 | 14.95 | 24.95 | 9.95 | 24.95 | 34.95 |
| Water-soluble organic solvents | (Di)propylene glycol monoalkyl ether-based solvent (S1) | PnP | | | | | | | | | | | | | | | 3 | 3 |
| | | DPnP | | 3 | 3 | 3 | 3 | 3 | 3 | 3 | 3 | 3 | 3 | 3 | 3 | 3 | | |
| | | PnB | | | | | | | | | | | | | | | | |
| | | DPnB | | | | | | | | | | | | | | | | |
| | Water-soluble organic solvent (S2) with SP value of 12 to 14: Alkanediol of 3 to 5 carbon atoms | 1,5-PenD | SP=12.4 | | | | | | | | | | | | | | | |
| | | 1,2-BD | SP=12.8 | | | | | | | | | | | | | | | |
| | | 1,3-BD | SP=12.8 | | | | | | | | | | | | | | | |
| | | 1,2-PD | SP=13.5 | 12 | 12 | 9 | 9 | 6 | 6 | 10 | 3 | 19 | 19 | 22 | 22 | 30 | 15 | 15 |
| | | 1,3-PD | SP=13.7 | | | | | | | | | | | | | | | |
| | Water-soluble organic solvent (S2) with SP value of 12 to 14: Other | DEG | SP=13.0 | | | | | | | | | | | | | | | |
| | | EtOH | SP=12.6 | | | | | | | | | | | | | | | |
| | Other water-soluble organic solvent | EG | | | | | | | | | | | | | | | | |
| | | 1,2-HexD | | | | | | | | | | | | | | | | |
| | | BDG | | | | | | | | | | | | | | | | |
| | | PGM | | 1 | 3 | 6 | 6 | 9 | 9 | 5 | | 3 | 3 | 3 | 3 | | | |
| | | DPM | | | | | | | | | | | | | | | | |
| Surfactants | Acetylenediol-based surfactant with HLB value of 10 or less | SF104 | HLB=3 | | | | | | | | | | | | | | | |
| | | SF420 | HLB=4 | | | | | | | | | | | | | | | |
| | | SF2502 | HLB=8 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | SF440 | HLB=8.1 | | | | | | | | | | | | | | | |
| | | Acetylenediol compound 1 | HLB=9.6 | | | | | | | | | | | | | | | |
| | Acetylenediol-based surfactant with HLB value greater than 10 | Acetylenediol compound 2 | HLB=11.1 | | | | | | | | | | | | | | | |
| | Siloxane-based surfactant | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | TW270 | | | | | | | | | | | | | | | | |
| | | KF642 | | | | | | | | | | | | | | | | |
| | | KF3551A | | | | | | | | | | | | | | | | |
| | | BYK-3420 | | | | | | | | | | | | | | | | |
| | (Poly)ethylene glycol monoalkyl ether-based surfactant: Terminal alkyl carbon number (CE):8 | Nonion EH-208 | EO groups: 8(CE×1.0) | | | | | | | | | | | | | | | |
| | (Poly)ethylene glycol monoalkyl ether-based surfactant: Terminal alkyl carbon number (CE):10 | Lutensol XP40 | EO groups: 4(CE×0.4) | | | | | | | | | | | | | | | |
| | | Lutensol XP80 | EO groups: 8(CE×0.8) | | | | | | | | | | | | | | | |
| | | Lutensol XP140 | EO groups: 14(CE×1.4) | | | | | | | | | | | | | | | |
| | (Poly)ethylene glycol monoalkyl ether-based surfactant: Terminal alkyl carbon number (CE):12 | Blaunon EL-1509P | EO groups: 9(CE×0.8) | | | | | | | | | | | | | | | |
| | | Blaunon EL-1512P | EO groups: 12(CE×1.0) | | | | | | | | | | | | | | | |
| | | Blaunon EL-1515 | EO groups: 15(CE×1.3) | | | | | | | | | | | | | | | |
| | | Blaunon EL-1521 | EO groups: 21(CE×1.8) | | | | | | | | | | | | | | | |
| | | Blaunon EL-1530 | EO groups: 30(CE×2.5) | | | | | | | | | | | | | | | |
| | | Blaunon EL-1540P | EO groups: 40(CE×3.3) | | | | | | | | | | | | | | | |
| | (Poly)ethylene glycol monoalkyl ether-based surfactant: Terminal alkyl carbon number (CE):12 to 13 | Newcol 2303 | EO groups: 3(CE×0.2 to 0.3) | | | | | | | | | | | | | | | |
| | | Newcol 2320 | EO groups: 20(CE×1.5 to 1.7) | | | | | | | | | | | | | | | |
| | (Poly)ethylene glycol monoalkyl ether-based surfactant: Terminal alkyl carbon number (CE):18 | Blaunon SR-720 | EO groups: 20(CE×1.1) | | | | | | | | | | | | | | | |
| | | Blaunon SR-730 | EO groups: 30(CE×1.7) | | | | | | | | | | | | | | | |
| | | Blaunon SR-750F | EO groups: 50(CE×2.8) | | | | | | | | | | | | | | | |
| Resins | | Resin 1 | Tg=39.7°C | | | | | | | | | | | | | | | |
| | | Resin 2 | Tg=59.7°C | | | | | | | | | | | | | | | |
| | | Resin 3 | Tg=94.9°C | | | | | | | | | | | | | | | |
| | | Resin 4 | Tg=106.1°C | 15 | 15 | 15 | 15 | 15 | 15 | 15 | 15 | 15 | 15 | 15 | 15 | 15 | 15 | 15 |
| | | Resin 5 | Tg=106.1°C | | | | | | | | | | | | | | | |
| Pigment dispersion | Type | | | black | black | white | black | white | black | black | white | white | black | white | black | white | white | black |
| | Blend amount | | | 30 | 30 | 40 | 30 | 40 | 30 | 30 | 40 | 40 | 30 | 40 | 30 | 40 | 40 | 30 |
| Other component | Preservative | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | 100 | 100 | 100 | 100 | 100 | 100 | 100 | 100 | 100 | 100 | 100 | 100 | 100 | 100 | 100 |

| | | 46 | 47 | 48 | 49 | 50 | 51 | 52 | 53 | 54 | 55 | 56 | 57 | 58 | 59 | 60 |
|---|---|---|---|---|---|---|---|---|---|---|---|---|---|---|---|---|
| Blend amounts | Amount of water-soluble organic solvent (S2) with SP value of 12 to 14 | 12 | 12 | 9 | 9 | 6 | 6 | 10 | 3 | 19 | 19 | 22 | 22 | 30 | 15 | 15 |
| | Amount of resin with Tg of 50 to 130°C | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Amount of alkanediol of 3 to 5 carbon atoms relative to amount of solvent (S1) | 4.0 | 4.0 | 3.0 | 3.0 | 2.0 | 2.0 | 3.3 | 1.0 | 6.3 | 6.3 | 7.3 | 7.3 | 10.0 | 5.0 | 5.0 |
| | Amount of DPnP relative to total amount of PGM, PnP and PnB | 3.0 | 1.0 | 0.50 | 0.50 | 0.33 | 0.33 | 0.60 | --- | 1.0 | 1.0 | 1.0 | 1.0 | --- | 0 | 0 |

[Table 3 continued]

| Aqueous inkjet ink No. | | | | | 61 | 62 | 63 | 64 | 65 | 66 | 67 | 68 | 69 | 70 | 71 | 72 | 73 | 74 | 75 |
|---|---|---|---|---|---|---|---|---|---|---|---|---|---|---|---|---|---|---|---|
| Water | | | | | 24.95 | 24.95 | 24.95 | 24.95 | 23.95 | 23.95 | 23.95 | 20.95 | 30.95 | 24.95 | 26.95 | 27.55 | 24.95 | 24.95 | 21.95 |
| Water-soluble organic solvents | (Di)propylene glycol monoalkyl ether-based solvent (S1) | | PnP | | | | | | | | | | | | | | | | |
| | | | DPnP | | | | | | 7 | 7 | 7 | 7 | 7 | 3 | 1 | 0.4 | | 10 | 10 |
| | | | PnB | | 3 | | | | | | | | | | | | | | |
| | | | DPnB | | | 3 | | | | | | | | | | | | | |
| | Water-soluble organic solvent (S2) with SP value of 12 to 14 | Alkanediol of 3 to 5 carbon atoms | 1,5-PenD | SP=12.4 | | | | | | | | | | | | | | | |
| | | | 1,2-BD | SP=12.8 | | | | | | 12 | | | | | | | | | |
| | | | 1,3-BD | SP=12.8 | | | | | | | 12 | | | | | | | | |
| | | | 1,2-PD | SP=13.5 | 15 | 15 | 15 | 15 | 12 | | | 12 | 12 | 12 | 12 | 12 | 18 | 8 | 8 |
| | | | 1,3-PD | SP=13.7 | | | | | | | | | | | | | | | |
| | | Other | DEG | SP=13.0 | | | | | | | | | | | | | | | |
| | | | EtOH | SP=12.6 | | | | | | | | | | | | | | | |
| | Other water-soluble organic solvent | | EG | | | | | | | | | | | | | | | | |
| | | | 1,2-HexD | | | | | | | | | | | | | | | | |
| | | | BDG | | | | | | | | | | | | | | | | |
| | | | PGM | | | | 3 | | | | | 3 | 3 | 3 | 3 | 3 | | | 3 |
| | | | DPM | | | | | 3 | | | | | | | | | | | |
| Surfactants | Acetylenediol-based surfactant with HLB value of 10 or less | | SF104 | HLB=3 | | | | | | | | | | | | | | | |
| | | | SF420 | HLB=4 | | | | | | | | | | | | | | | |
| | | | SF2502 | HLB=8 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | SF440 | HLB=8.1 | | | | | | | | | | | | | | | |
| | | | Acetylenediol compound 1 | HLB=9.6 | | | | | | | | | | | | | | | |
| | Acetylenediol-based surfactant with HLB value greater than 10 | | Acetylenediol compound 2 | HLB=11.1 | | | | | | | | | | | | | | | |
| | Siloxane-based surfactant | | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | | TW270 | | | | | | | | | | | | | | | | |
| | | | KF642 | | | | | | | | | | | | | | | | |
| | | | KF3551A | | | | | | | | | | | | | | | | |
| | | | BYK-3420 | | | | | | | | | | | | | | | | |
| | (Poly)ethylene glycol monoalkyl ether-based surfactant | Terminal alkyl carbon number (CE):8 | Nonion EH-208 | EO groups: 8(CE×1.0) | | | | | | | | | | | | | | | |
| | | Terminal alkyl carbon number (CE):10 | Lutensol XP40 | EO groups: 4(CE×0.4) | | | | | | | | | | | | | | | |
| | | | Lutensol XP80 | EO groups: 8(CE×0.8) | | | | | | | | | | | | | | | |
| | | | Lutensol XP140 | EO groups: 14(CE×1.4) | | | | | | | | | | | | | | | |
| | | Terminal alkyl carbon number (CE):12 | Blaunon EL-1509P | EO groups: 9(CE×0.8) | | | | | | | | | | | | | | | |
| | | | Blaunon EL-1512P | EO groups: 12(CE×1.0) | | | | | | | | | | | | | | | |
| | | | Blaunon EL-1515 | EO groups: 15(CE×1.3) | | | | | | | | | | | | | | | |
| | | | Blaunon EL-1521 | EO groups: 21(CE×1.8) | | | | | | | | | | | | | | | |
| | | | Blaunon EL-1530 | EO groups: 30(CE×2.5) | | | | | | | | | | | | | | | |
| | | | Blaunon EL-1540P | EO groups: 40(CE×3.3) | | | | | | | | | | | | | | | |
| | | Terminal alkyl carbon number (CE):12 to 13 | Newcol 2303 | EO groups: 3(CE×0.2 to 0.3) | | | | | | | | | | | | | | | |
| | | | Newcol 2320 | EO groups: 20(CE×1.5 to 1.7) | | | | | | | | | | | | | | | |
| | | Terminal alkyl carbon number (CE):18 | Blaunon SR-720 | EO groups: 20(CE×1.1) | | | | | | | | | | | | | | | |
| | | | Blaunon SR-730 | EO groups: 30(CE×1.7) | | | | | | | | | | | | | | | |
| | | | Blaunon SR-750F | EO groups: 50(CE×2.8) | | | | | | | | | | | | | | | |
| Resins | | | Resin 1 | Tg=39.7°C | | | | | | | | | | | | | | | |
| | | | Resin 2 | Tg=59.7°C | | | | | | | | | | | | | | | |
| | | | Resin 3 | Tg=94.9°C | | | | | | | | | | | | | | | |
| | | | Resin 4 | Tg=106.1°C | 15 | 15 | 15 | 15 | 15 | 15 | 15 | 15 | 15 | 15 | 15 | 15 | 15 | 15 | 15 |
| | | | Resin 5 | Tg=106.1°C | | | | | | | | | | | | | | | |
| Pigment dispersion | Type | | | | white | white | white | white | white | white | white | white | black | white | white | white | white | white | white |
| | Blend amount | | | | 40 | 40 | 40 | 40 | 40 | 40 | 40 | 40 | 30 | 40 | 40 | 40 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 15 | 15 | 15 | 15 | 12 | 12 | 12 | 12 | 12 | 12 | 12 | 12 | 18 | 8 | 8 |
| | Amount of resin with Tg of 50 to 130°C | | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | | 1.5 | 1.5 | --- | --- | 0.64 | 0.64 | 0.64 | 0.64 | 0.64 | 1.5 | 4.5 | 11.3 | --- | 0.45 | 0.45 |
| | Amount of siloxane-based surfactant / (poly)ethylene glycol monoalkyl ether-based surfactant relative to amount of acetylenediol-based surfactant with HLB value greater than 10 | | | | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Amount of alkanediol of 3 to 5 carbon atoms relative to amount of solvent (S1) | | | | 5.0 | 5.0 | --- | --- | 1.7 | 1.7 | 1.7 | 1.7 | 1.7 | 4.0 | 12.0 | 30.0 | --- | 0.80 | 0.80 |
| | Amount of DPnP relative to total amount of PGM, PnP and PnB | | | | 0 | --- | 0 | --- | --- | --- | --- | 2.3 | 2.3 | 1.0 | 0.33 | 0.13 | --- | --- | 3.3 |

[Table 3 continued]

| Aqueous inkjet ink No. | | | | 76 | 77 | 78 | 79 | 80 | 81 | 82 | 83 | 84 | 85 | 86 | 87 | 88 | 89 | 90 |
|---|---|---|---|---|---|---|---|---|---|---|---|---|---|---|---|---|---|---|
| Water | | | | 31.95 | 24.95 | 24.95 | 24.95 | 24.95 | 24.95 | 34.95 | 34.95 | 24.95 | 24.95 | 25.35 | 25.25 | 25.25 | 25.15 | 25.15 |
| Water-soluble organic solvents | (Di)propylene glycol monoalkyl ether-based solvent (S1) | PnP | | | | | | | | | | | | | | | | |
| | | DPnP | | 10 | 3 | 3 | 3 | 3 | 3 | 3 | 3 | 3 | 3 | 3 | 3 | 3 | 3 | 3 |
| | | PnB | | | | | | | | | | | | | | | | |
| | | DPnB | | | | | | | | | | | | | | | | |
| | Water-soluble organic solvent (S2) with SP value of 12 to 14 / Alkanediol of 3 to 5 carbon atoms | 1,5-PenD | SP=12.4 | | | | | | | | | | | | | | | |
| | | 1,2-BD | SP=12.8 | | | | | | | | | | | | | | | |
| | | 1,3-BD | SP=12.8 | | | | | | | | | | | | | | | |
| | | 1,2-PD | SP=13.5 | 8 | 15 | 12 | 15 | 12 | 15 | 15 | 12 | 15 | 15 | 15 | 15 | 12 | 15 | 12 |
| | | 1,3-PD | SP=13.7 | | | | | | | | | | | | | | | |
| | Water-soluble organic solvent (S2) with SP value of 12 to 14 / Other | DEG | SP=13.0 | | | | | | | | | | | | | | | |
| | | EtOH | SP=12.6 | | | | | | | | | | | | | | | |
| | Other water-soluble organic solvent | EG | | | | | | | | | | | | | | | | |
| | | 1,2-HexD | | | | | | | | | | | | | | | | |
| | | BDG | | | | | | | | | | | | | | | | |
| | | PGM | | 3 | | 3 | | 3 | | | 3 | | | | | 3 | | 3 |
| | | DPM | | | | | | | | | | | | | | | | |
| Surfactants | Acetylenediol-based surfactant with HLB value of 10 or less | SF104 | HLB=3 | | 0.5 | 0.5 | | | | | | | | | | | | |
| | | SF420 | HLB=4 | | | | 0.5 | 0.5 | | | | | | | | | | |
| | | SF2502 | HLB=8 | 0.5 | | | | | | | | | | 0.1 | 0.2 | 0.2 | 0.3 | 0.3 |
| | | SF440 | HLB=8.1 | | | | | | 0.5 | 0.5 | 0.5 | | | | | | | |
| | | Acetylenediol compound 1 | HLB=9.6 | | | | | | | | | 0.5 | | | | | | |
| | Acetylenediol-based surfactant with HLB value greater than 10 | Acetylenediol compound 2 | HLB=11.1 | | | | | | | | | | 0.5 | | | | | |
| | Siloxane-based surfactant | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | TW270 | | | | | | | | | | | | | | | | |
| | | KF642 | | | | | | | | | | | | | | | | |
| | | KF3551A | | | | | | | | | | | | | | | | |
| | | BYK-3420 | | | | | | | | | | | | | | | | |
| | (Poly)ethylene glycol monoalkyl ether-based surfactant / Terminal alkyl carbon number (CE):8 | Nonion EH-208 | EO groups: 8(CE×1.0) | | | | | | | | | | | | | | | |
| | (Poly)ethylene glycol monoalkyl ether-based surfactant / Terminal alkyl carbon number (CE):10 | Lutensol XP40 | EO groups: 4(CE×0.4) | | | | | | | | | | | | | | | |
| | | Lutensol XP80 | EO groups: 8(CE×0.8) | | | | | | | | | | | | | | | |
| | | Lutensol XP140 | EO groups: 14(CE×1.4) | | | | | | | | | | | | | | | |
| | (Poly)ethylene glycol monoalkyl ether-based surfactant / Terminal alkyl carbon number (CE):12 | Blaunon EL-1509P | EO groups: 9(CE×0.8) | | | | | | | | | | | | | | | |
| | | Blaunon EL-1512P | EO groups: 12(CE×1.0) | | | | | | | | | | | | | | | |
| | | Blaunon EL-1515 | EO groups: 15(CE×1.3) | | | | | | | | | | | | | | | |
| | | Blaunon EL-1521 | EO groups: 21(CE×1.8) | | | | | | | | | | | | | | | |
| | | Blaunon EL-1530 | EO groups: 30(CE×2.5) | | | | | | | | | | | | | | | |
| | | Blaunon EL-1540P | EO groups: 40(CE×3.3) | | | | | | | | | | | | | | | |
| | (Poly)ethylene glycol monoalkyl ether-based surfactant / Terminal alkyl carbon number (CE):12 to 13 | Newcol 2303 | EO groups: 3(CE×0.2 to 0.3) | | | | | | | | | | | | | | | |
| | | Newcol 2320 | EO groups: 20(CE×1.5 to 1.7) | | | | | | | | | | | | | | | |
| | (Poly)ethylene glycol monoalkyl ether-based surfactant / Terminal alkyl carbon number (CE):18 | Blaunon SR-720 | EO groups: 20(CE×1.1) | | | | | | | | | | | | | | | |
| | | Blaunon SR-730 | EO groups: 30(CE×1.7) | | | | | | | | | | | | | | | |
| | | Blaunon SR-750F | EO groups: 50(CE×2.8) | | | | | | | | | | | | | | | |
| Resins | | Resin 1 | Tg=39.7°C | | | | | | | | | | | | | | | |
| | | Resin 2 | Tg=59.7°C | | | | | | | | | | | | | | | |
| | | Resin 3 | Tg=94.9°C | | | | | | | | | | | | | | | |
| | | Resin 4 | Tg=106.1°C | 15 | 15 | 15 | 15 | 15 | 15 | 15 | 15 | 15 | 15 | 15 | 15 | 15 | 15 | 15 |
| | | Resin 5 | Tg=106.1°C | | | | | | | | | | | | | | | |
| Pigment dispersion | Type | | | black | white | white | white | white | white | black | black | white | white | white | white | white | white | white |
| | Blend amount | | | 30 | 40 | 40 | 40 | 40 | 40 | 30 | 30 | 40 | 40 | 40 | 40 | 40 | 40 | 40 |
| Other component | Preservative | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | 8 | 15 | 12 | 15 | 12 | 15 | 15 | 12 | 15 | 15 | 15 | 15 | 12 | 15 | 12 |
| | Amount of resin with Tg of 50 to 130°C | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | 0.45 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | 3.0 | 3.0 | 3.0 | 3.0 | 3.0 | 3.0 | 3.0 | 3.0 | 3.0 | --- | 15.0 | 7.5 | 7.5 | 5.0 | 5.0 |
| | Amount of alkanediol of 3 to 5 carbon atoms relative to amount of solvent (S1) | | | 0.80 | 5.0 | 4.0 | 5.0 | 4.0 | 5.0 | 5.0 | 4.0 | 5.0 | 5.0 | 5.0 | 5.0 | 4.0 | 5.0 | 4.0 |
| | Amount of DPnP relative to total amount of PGM, PnP and PnB | | | 3.3 | --- | 1.0 | --- | 1.0 | --- | --- | 1.0 | --- | --- | --- | --- | 1.0 | --- | 1.0 |

[Table 3 continued]

| | | | | 91 | 92 | 93 | 94 | 95 | 96 | 97 | 98 | 99 | 100 | 101 | 102 | 103 | 104 | 105 |
|---|---|---|---|---|---|---|---|---|---|---|---|---|---|---|---|---|---|---|
| Aqueous inkjet ink No. | | | | 91 | 92 | 93 | 94 | 95 | 96 | 97 | 98 | 99 | 100 | 101 | 102 | 103 | 104 | 105 |
| Water | | | | 25.05 | 25.05 | 35.05 | 35.05 | 24.45 | 24.45 | 24.25 | 24.25 | 24.25 | 33.95 | 23.45 | 23.45 | 33.15 | 32.65 | 32.65 |
| Water-soluble organic solvents | (Di)propylene glycol monoalkyl ether-based solvent (S1) | PnP | | | | | | | | | | | | | | | | |
| | | DPnP | | 3 | 3 | 3 | 3 | 3 | 3 | 3 | 3 | 3 | 3 | 3 | 3 | 3 | 3 | 3 |
| | | PnB | | | | | | | | | | | | | | | | |
| | | DPnB | | | | | | | | | | | | | | | | |
| | Water-soluble organic solvent (S2) with SP value of 12 to 14 / Alkanediol of 3 to 5 carbon atoms | 1,5-PenD | SP=12.4 | | | | | | | | | | | | | | | |
| | | 1,2-BD | SP=12.8 | | | | | | | | 15 | | | | | | | 15 |
| | | 1,3-BD | SP=12.8 | | | | | | | | | 15 | | | | | | |
| | | 1,2-PD | SP=13.5 | 15 | 12 | 15 | 12 | 15 | 12 | 15 | | | 15 | 15 | 12 | 15 | 15 | |
| | | 1,3-PD | SP=13.7 | | | | | | | | | | | | | | | |
| | Water-soluble organic solvent (S2) with SP value of 12 to 14 / Other | DEG | SP=13.0 | | | | | | | | | | | | | | | |
| | | EtOH | SP=12.6 | | | | | | | | | | | | | | | |
| | Other water-soluble organic solvent | EG | | | | | | | | | | | | | | | | |
| | | 1,2-HexD | | | | | | | | | | | | | | | | |
| | | BDG | | | | | | | | | | | | | | | | |
| | | PGM | | | 3 | | 3 | | 3 | | | | | | 3 | | | |
| | | DPM | | | | | | | | | | | | | | | | |
| Surfactants | Acetylenediol-based surfactant with HLB value of 10 or less | SF104 | HLB=3 | | | | | | | | | | | | | | | |
| | | SF420 | HLB=4 | | | | | | | | | | | | | | | |
| | | SF2502 | HLB=8 | 0.4 | 0.4 | 0.4 | 0.4 | 1.0 | 1.0 | 1.2 | 1.2 | 1.2 | 1.5 | 2.0 | 2.0 | 2.3 | 2.8 | 2.8 |
| | | SF440 | HLB=8.1 | | | | | | | | | | | | | | | |
| | | Acetylenediol compound 1 | HLB=9.6 | | | | | | | | | | | | | | | |
| | Acetylenediol-based surfactant with HLB value greater than 10 | Acetylenediol compound 2 | HLB=11.1 | | | | | | | | | | | | | | | |
| | Siloxane-based surfactant | TW280 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | TW270 | | | | | | | | | | | | | | | | |
| | | KF642 | | | | | | | | | | | | | | | | |
| | | KF3551A | | | | | | | | | | | | | | | | |
| | | BYK-3420 | | | | | | | | | | | | | | | | |
| | (Poly)ethylene glycol monoalkyl ether-based surfactant / Terminal alkyl carbon number (CE):8 | Nonion EH-208 | EO groups: 8(CE×1.0) | | | | | | | | | | | | | | | |
| | (Poly)ethylene glycol monoalkyl ether-based surfactant / Terminal alkyl carbon number (CE):10 | Lutensol XP40 | EO groups: 4(CE×0.4) | | | | | | | | | | | | | | | |
| | | Lutensol XP80 | EO groups: 8(CE×0.8) | | | | | | | | | | | | | | | |
| | | Lutensol XP140 | EO groups: 14(CE×1.4) | | | | | | | | | | | | | | | |
| | (Poly)ethylene glycol monoalkyl ether-based surfactant / Terminal alkyl carbon number (CE):12 | Blaunon EL-1509P | EO groups: 9(CE×0.8) | | | | | | | | | | | | | | | |
| | | Blaunon EL-1512P | EO groups: 12(CE×1.0) | | | | | | | | | | | | | | | |
| | | Blaunon EL-1515 | EO groups: 15(CE×1.3) | | | | | | | | | | | | | | | |
| | | Blaunon EL-1521 | EO groups: 21(CE×1.8) | | | | | | | | | | | | | | | |
| | | Blaunon EL-1530 | EO groups: 30(CE×2.5) | | | | | | | | | | | | | | | |
| | | Blaunon EL-1540P | EO groups: 40(CE×3.3) | | | | | | | | | | | | | | | |
| | (Poly)ethylene glycol monoalkyl ether-based surfactant / Terminal alkyl carbon number (CE):12 to 13 | Newcol 2303 | EO groups: 3(CE×0.2 to 0.3) | | | | | | | | | | | | | | | |
| | | Newcol 2320 | EO groups: 20(CE×1.5 to 1.7) | | | | | | | | | | | | | | | |
| | (Poly)ethylene glycol monoalkyl ether-based surfactant / Terminal alkyl carbon number (CE):18 | Blaunon SR-720 | EO groups: 20(CE×1.1) | | | | | | | | | | | | | | | |
| | | Blaunon SR-730 | EO groups: 30(CE×1.7) | | | | | | | | | | | | | | | |
| | | Blaunon SR-750F | EO groups: 50(CE×2.8) | | | | | | | | | | | | | | | |
| Resins | | Resin 1 | Tg=39.7°C | | | | | | | | | | | | | | | |
| | | Resin 2 | Tg=59.7°C | | | | | | | | | | | | | | | |
| | | Resin 3 | Tg=94.9°C | | | | | | | | | | | | | | | |
| | | Resin 4 | Tg=106.1°C | 15 | 15 | 15 | 15 | 15 | 15 | 15 | 15 | 15 | 15 | 15 | 15 | 15 | 15 | 15 |
| | | Resin 5 | Tg=106.1°C | | | | | | | | | | | | | | | |
| Pigment dispersion | Type | | | white | white | black | black | white | white | white | white | white | black | white | white | black | black | black |
| | Blend amount | | | 40 | 40 | 30 | 30 | 40 | 40 | 40 | 40 | 40 | 30 | 40 | 40 | 30 | 30 | 30 |
| Other component | Preservative | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | 15 | 12 | 15 | 12 | 15 | 12 | 15 | 15 | 15 | 15 | 15 | 12 | 15 | 15 | 15 |
| | Amount of resin with Tg of 50 to 130°C | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | 3.8 | 3.8 | 3.8 | 3.8 | 1.5 | 1.5 | 1.3 | 1.3 | 1.3 | 1.0 | 0.75 | 0.75 | 0.65 | 0.54 | 0.54 |
| | Amount of alkanediol of 3 to 5 carbon atoms relative to amount of solvent (S1) | | | 5.0 | 4.0 | 5.0 | 4.0 | 5.0 | 4.0 | 5.0 | 5.0 | 5.0 | 5.0 | 5.0 | 4.0 | 5.0 | 5.0 | 5.0 |
| | Amount of DPnP relative to total amount of PGM, PnP and PnB | | | --- | 1.0 | --- | 1.0 | --- | 1.0 | --- | --- | --- | --- | --- | 1.0 | --- | --- | --- |

[Table 3 continued]

| Aqueous inkjet ink No. | | | | | 106 | 107 | 108 | 109 | 110 | 111 | 112 | 113 | 114 | 115 | 116 | 117 | 118 | 119 | 120 |
|---|---|---|---|---|---|---|---|---|---|---|---|---|---|---|---|---|---|---|---|
| Water | | | | | 32.65 | 22.65 | 22.65 | 31.95 | 24.95 | 24.95 | 24.95 | 24.95 | 24.95 | 25.45 | 24.95 | 26.35 | 26.35 | 25.85 | 25.85 |
| Water-soluble organic solvents | (Di)propylene glycol monoalkyl ether-based solvent (S1) | | PnP | | | | | | | | | | | | | | | | |
| | | | DPnP | | 3 | 3 | 3 | 3 | 3 | 3 | 3 | 3 | 3 | 3 | 3 | 3 | 3 | 3 | 3 |
| | | | PnB | | | | | | | | | | | | | | | | |
| | | | DPnB | | | | | | | | | | | | | | | | |
| | Water-soluble organic solvent (S2) with SP value of 12 to 14 | Alkanediol of 3 to 5 carbon atoms | 1,5-PenD | SP=12.4 | | | | | | | | | | | | | | | |
| | | | 1,2-BD | SP=12.8 | | 15 | | | | | | | | | | | | | |
| | | | 1,3-BD | SP=12.8 | 15 | | 15 | | | | | | | | | | | | |
| | | | 1,2-PD | SP=13.5 | | | | 15 | 12 | 12 | 12 | 12 | 15 | 15 | 15 | 15 | 12 | 15 | 12 |
| | | | 1,3-PD | SP=13.7 | | | | | | | | | | | | | | | |
| | | Other | DEG | SP=13.0 | | | | | | | | | | | | | | | |
| | | | EtOH | SP=12.6 | | | | | | | | | | | | | | | |
| | Other water-soluble organic solvent | | EG | | | | | | | | | | | | | | | | |
| | | | 1,2-HexD | | | | | | | | | | | | | | | | |
| | | | BDG | | | | | | | | | | | | | | | | |
| | | | PGM | | | | | | 3 | 3 | 3 | 3 | | | | | 3 | | 3 |
| | | | DPM | | | | | | | | | | | | | | | | |
| Surfactants | Acetylenediol-based surfactant with HLB value of 10 or less | | SF104 | HLB=3 | | | | | | | | | | | | | | | |
| | | | SF420 | HLB=4 | | | | | | | | | | | | | | | |
| | | | SF2502 | HLB=8 | 2.8 | 2.8 | 2.8 | 3.5 | 0.5 | 0.5 | 0.5 | 0.5 | 0.5 | | 2.0 | 0.5 | 0.5 | 0.5 | 0.5 |
| | | | SF440 | HLB=8.1 | | | | | | | | | | | | | | | |
| | | | Acetylenediol compound 1 | HLB=9.6 | | | | | | | | | | | | | | | |
| | Acetylenediol-based surfactant with HLB value greater than 10 | | Acetylenediol compound 2 | HLB=11.1 | | | | | | | | | | | | | | | |
| | Siloxane-based surfactant | | TW280 | | 1.5 | 1.5 | 1.5 | 1.5 | | | | | | 1.5 | | 0.1 | 0.1 | 0.6 | 0.6 |
| | | | TW270 | | | | | | 1.5 | | | | | | | | | | |
| | | | KF642 | | | | | | | 1.5 | | | | | | | | | |
| | | | KF3551A | | | | | | | | 1.5 | | | | | | | | |
| | | | BYK-3420 | | | | | | | | | 1.5 | 1.5 | | | | | | |
| | (Poly)ethylene glycol monoalkyl ether-based surfactant | Terminal alkyl carbon number (CE):8 | Nonion EH-208 | EO groups: 8(CE×1.0) | | | | | | | | | | | | | | | |
| | | Terminal alkyl carbon number (CE):10 | Lutensol XP40 | EO groups: 4(CE×0.4) | | | | | | | | | | | | | | | |
| | | | Lutensol XP80 | EO groups: 8(CE×0.8) | | | | | | | | | | | | | | | |
| | | | Lutensol XP140 | EO groups: 14(CE×1.4) | | | | | | | | | | | | | | | |
| | | Terminal alkyl carbon number (CE):12 | Blaunon EL-1509P | EO groups: 9(CE×0.8) | | | | | | | | | | | | | | | |
| | | | Blaunon EL-1512P | EO groups: 12(CE×1.0) | | | | | | | | | | | | | | | |
| | | | Blaunon EL-1515 | EO groups: 15(CE×1.3) | | | | | | | | | | | | | | | |
| | | | Blaunon EL-1521 | EO groups: 21(CE×1.8) | | | | | | | | | | | | | | | |
| | | | Blaunon EL-1530 | EO groups: 30(CE×2.5) | | | | | | | | | | | | | | | |
| | | | Blaunon EL-1540P | EO groups: 40(CE×3.3) | | | | | | | | | | | | | | | |
| | | Terminal alkyl carbon number (CE):12 to 13 | Newcol 2303 | EO groups: 3(CE×0.2 to 0.3) | | | | | | | | | | | | | | | |
| | | | Newcol 2320 | EO groups: 20(CE×1.5 to 1.7) | | | | | | | | | | | | | | | |
| | | Terminal alkyl carbon number (CE):18 | Blaunon SR-720 | EO groups: 20(CE×1.1) | | | | | | | | | | | | | | | |
| | | | Blaunon SR-730 | EO groups: 30(CE×1.7) | | | | | | | | | | | | | | | |
| | | | Blaunon SR-750F | EO groups: 50(CE×2.8) | | | | | | | | | | | | | | | |
| Resins | | | Resin 1 | Tg=39.7°C | | | | | | | | | | | | | | | |
| | | | Resin 2 | Tg=59.7°C | | | | | | | | | | | | | | | |
| | | | Resin 3 | Tg=94.9°C | | | | | | | | | | | | | | | |
| | | | Resin 4 | Tg=106.1°C | 15 | 15 | 15 | 15 | 15 | 15 | 15 | 15 | 15 | 15 | 15 | 15 | 15 | 15 | 15 |
| | | | Resin 5 | Tg=106.1°C | | | | | | | | | | | | | | | |
| Pigment dispersion | Type | | | | black | white | white | black | white | white | white | white | white | white | white | white | white | white | white |
| | Blend amount | | | | 30 | 40 | 40 | 30 | 40 | 40 | 40 | 40 | 40 | 40 | 40 | 40 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 15 | 15 | 15 | 15 | 12 | 12 | 12 | 12 | 15 | 15 | 15 | 15 | 12 | 15 | 12 |
| | Amount of resin with Tg of 50 to 130°C | | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | | 0.54 | 0.54 | 0.54 | 0.43 | 3.0 | 3.0 | 3.0 | 3.0 | 3.0 | --- | 0 | 0.20 | 0.20 | 1.2 | 1.2 |
| | Amount of alkanediol of 3 to 5 carbon atoms relative to amount of solvent (S1) | | | | 5.0 | 5.0 | 5.0 | 5.0 | 4.0 | 4.0 | 4.0 | 4.0 | 5.0 | 5.0 | 5.0 | 5.0 | 4.0 | 5.0 | 4.0 |
| | Amount of DPnP relative to total amount of PGM, PnP and PnB | | | | --- | --- | --- | --- | 1.0 | 1.0 | 1.0 | 1.0 | --- | --- | --- | --- | 1.0 | --- | 1.0 |

[Table 3 continued]

| | | | | 121 | 122 | 123 | 124 | 125 | 126 | 127 | 128 | 129 | 130 | 131 | 132 | 133 | 134 | 135 |
|---|---|---|---|---|---|---|---|---|---|---|---|---|---|---|---|---|---|---|
| Aqueous inkjet ink No. | | | | 121 | 122 | 123 | 124 | 125 | 126 | 127 | 128 | 129 | 130 | 131 | 132 | 133 | 134 | 135 |
| Water | | | | 25.25 | 25.25 | 24.25 | 24.25 | 24.25 | 24.25 | 23.65 | 23.65 | 34.65 | 34.65 | 34.75 | 34.75 | 34.95 | 34.95 | 35.15 |
| Water-soluble organic solvents | (Di)propylene glycol monoalkyl ether-based solvent (S1) | PnP | | | | | | | | | | | | | | | | |
| | | DPnP | | 3 | 3 | 3 | 3 | 3 | 3 | 3 | 3 | 3 | 3 | 3 | 3 | 3 | 3 | 3 |
| | | PnB | | | | | | | | | | | | | | | | |
| | | DPnB | | | | | | | | | | | | | | | | |
| | Water-soluble organic solvent (S2) with SP value of 12 to 14 / Alkanediol of 3 to 5 carbon atoms | 1,5-PenD | SP=12.4 | | | | | | | | | | | | | | | |
| | | 1,2-BD | SP=12.8 | | | | 15 | | | | | | | | | | | |
| | | 1,3-BD | SP=12.8 | | | | | 15 | | | | | | | | | | |
| | | 1,2-PD | SP=13.5 | 15 | 12 | 15 | | | 12 | 15 | 12 | 15 | 12 | 15 | 12 | 15 | 12 | 15 |
| | | 1,3-PD | SP=13.7 | | | | | | | | | | | | | | | |
| | Water-soluble organic solvent (S2) with SP value of 12 to 14 / Other | DEG | SP=13.0 | | | | | | | | | | | | | | | |
| | | EtOH | SP=12.6 | | | | | | | | | | | | | | | |
| | Other water-soluble organic solvent | EG | | | | | | | | | | | | | | | | |
| | | 1,2-HexD | | | | | | | | | | | | | | | | |
| | | BDG | | | | | | | | | | | | | | | | |
| | | PGM | | | 3 | | | | 3 | | 3 | | 3 | | 3 | | 3 | |
| | | DPM | | | | | | | | | | | | | | | | |
| Surfactants | Acetylenediol-based surfactant with HLB value of 10 or less | SF104 | HLB=3 | | | | | | | | | | | | | | | |
| | | SF420 | HLB=4 | | | | | | | | | | | | | | | |
| | | SF2502 | HLB=8 | 0.5 | 0.5 | 0.5 | 0.5 | 0.5 | 0.5 | 0.5 | 0.5 | 0.5 | 0.5 | 1.5 | 1.5 | 1.5 | 1.5 | 1.5 |
| | | SF440 | HLB=8.1 | | | | | | | | | | | | | | | |
| | | Acetylenediol compound 1 | HLB=9.6 | | | | | | | | | | | | | | | |
| | Acetylenediol-based surfactant with HLB value greater than 10 | Acetylenediol compound 2 | HLB=11.1 | | | | | | | | | | | | | | | |
| | Siloxane-based surfactant | TW280 | | 1.2 | 1.2 | 2.2 | 2.2 | 2.2 | 2.2 | 2.8 | 2.8 | 1.8 | 1.8 | 0.7 | 0.7 | 0.5 | 0.5 | 0.3 |
| | | TW270 | | | | | | | | | | | | | | | | |
| | | KF642 | | | | | | | | | | | | | | | | |
| | | KF3551A | | | | | | | | | | | | | | | | |
| | | BYK-3420 | | | | | | | | | | | | | | | | |
| | (Poly)ethylene glycol monoalkyl ether-based surfactant / Terminal alkyl carbon number (CE):8 | Nonion EH-208 | EO groups: 8(CE×1.0) | | | | | | | | | | | | | | | |
| | (Poly)ethylene glycol monoalkyl ether-based surfactant / Terminal alkyl carbon number (CE):10 | Lutensol XP40 | EO groups: 4(CE×0.4) | | | | | | | | | | | | | | | |
| | | Lutensol XP80 | EO groups: 8(CE×0.8) | | | | | | | | | | | | | | | |
| | | Lutensol XP140 | EO groups: 14(CE×1.4) | | | | | | | | | | | | | | | |
| | (Poly)ethylene glycol monoalkyl ether-based surfactant / Terminal alkyl carbon number (CE):12 | Blaunon EL-1509P | EO groups: 9(CE×0.8) | | | | | | | | | | | | | | | |
| | | Blaunon EL-1512P | EO groups: 12(CE×1.0) | | | | | | | | | | | | | | | |
| | | Blaunon EL-1515 | EO groups: 15(CE×1.3) | | | | | | | | | | | | | | | |
| | | Blaunon EL-1521 | EO groups: 21(CE×1.8) | | | | | | | | | | | | | | | |
| | | Blaunon EL-1530 | EO groups: 30(CE×2.5) | | | | | | | | | | | | | | | |
| | | Blaunon EL-1540P | EO groups: 40(CE×3.3) | | | | | | | | | | | | | | | |
| | (Poly)ethylene glycol monoalkyl ether-based surfactant / Terminal alkyl carbon number (CE):12 to 13 | Newcol 2303 | EO groups: 3(CE×0.2 to 0.3) | | | | | | | | | | | | | | | |
| | | Newcol 2320 | EO groups: 20(CE×1.5 to 1.7) | | | | | | | | | | | | | | | |
| | (Poly)ethylene glycol monoalkyl ether-based surfactant / Terminal alkyl carbon number (CE):18 | Blaunon SR-720 | EO groups: 20(CE×1.1) | | | | | | | | | | | | | | | |
| | | Blaunon SR-730 | EO groups: 30(CE×1.7) | | | | | | | | | | | | | | | |
| | | Blaunon SR-750F | EO groups: 50(CE×2.8) | | | | | | | | | | | | | | | |
| Resins | | Resin 1 | Tg=39.7°C | | | | | | | | | | | | | | | |
| | | Resin 2 | Tg=59.7°C | | | | | | | | | | | | | | | |
| | | Resin 3 | Tg=94.9°C | | | | | | | | | | | | | | | |
| | | Resin 4 | Tg=106.1°C | 15 | 15 | 15 | 15 | 15 | 15 | 15 | 15 | 15 | 15 | 15 | 15 | 15 | 15 | 15 |
| | | Resin 5 | Tg=106.1°C | | | | | | | | | | | | | | | |
| Pigment dispersion | Type | | | white | white | white | white | white | white | white | white | black | black | black | black | black | black | black |
| | Blend amount | | | 40 | 40 | 40 | 40 | 40 | 40 | 40 | 40 | 30 | 30 | 30 | 30 | 30 | 30 | 30 |
| Other component | Preservative | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | 15 | 12 | 15 | 15 | 15 | 12 | 15 | 12 | 15 | 12 | 15 | 12 | 15 | 12 | 15 |
| | Amount of resin with Tg of 50 to 130°C | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | 2.4 | 2.4 | 4.4 | 4.4 | 4.4 | 4.4 | 5.6 | 5.6 | 3.6 | 3.6 | 0.47 | 0.47 | 0.33 | 0.33 | 0.20 |
| | Amount of alkanediol of 3 to 5 carbon atoms relative to amount of solvent (S1) | | | 5.0 | 4.0 | 5.0 | 5.0 | 5.0 | 4.0 | 5.0 | 4.0 | 5.0 | 4.0 | 5.0 | 4.0 | 5.0 | 4.0 | 5.0 |
| | Amount of DPnP relative to total amount of PGM, PnP and PnB | | | --- | 1.0 | --- | --- | --- | 1.0 | --- | 1.0 | --- | 1.0 | --- | 1.0 | --- | 1.0 | --- |

[Table 3 continued]

| Aqueous inkjet ink No. | | | | | 136 | 137 | 138 | 139 | 140 | 141 | 142 | 143 | 144 | 145 | 146 | 147 | 148 | 149 | 150 |
|---|---|---|---|---|---|---|---|---|---|---|---|---|---|---|---|---|---|---|---|
| Water | | | | | 35.15 | 24.95 | 24.95 | 24.95 | 24.95 | 24.95 | 24.95 | 24.95 | 24.95 | 24.95 | 24.95 | 24.95 | 24.95 | 24.95 | 24.95 |
| Water-soluble organic solvents | (Di)propylene glycol monoalkyl ether-based solvent (S1) | | PnP | | | | | | | | | | | | | | | | |
| Water-soluble organic solvents | (Di)propylene glycol monoalkyl ether-based solvent (S1) | | DPnP | | 3 | 3 | 3 | 3 | 3 | 3 | 3 | 3 | 3 | 3 | 3 | 3 | 3 | 3 | 3 |
| Water-soluble organic solvents | (Di)propylene glycol monoalkyl ether-based solvent (S1) | | PnB | | | | | | | | | | | | | | | | |
| Water-soluble organic solvents | (Di)propylene glycol monoalkyl ether-based solvent (S1) | | DPnB | | | | | | | | | | | | | | | | |
| Water-soluble organic solvents | Water-soluble organic solvent (S2) with SP value of 12 to 14 | Alkanediol of 3 to 5 carbon atoms | 1,5-PenD | SP=12.4 | | | | | | | | | | | | | | | |
| Water-soluble organic solvents | Water-soluble organic solvent (S2) with SP value of 12 to 14 | Alkanediol of 3 to 5 carbon atoms | 1,2-BD | SP=12.8 | | | | | | | | | | | | | | | |
| Water-soluble organic solvents | Water-soluble organic solvent (S2) with SP value of 12 to 14 | Alkanediol of 3 to 5 carbon atoms | 1,3-BD | SP=12.8 | | | | | | | | | | | | | | | |
| Water-soluble organic solvents | Water-soluble organic solvent (S2) with SP value of 12 to 14 | Alkanediol of 3 to 5 carbon atoms | 1,2-PD | SP=13.5 | 12 | 15 | 15 | 15 | 15 | 15 | 15 | 15 | 15 | 15 | 15 | 15 | 15 | 15 | 15 |
| Water-soluble organic solvents | Water-soluble organic solvent (S2) with SP value of 12 to 14 | Alkanediol of 3 to 5 carbon atoms | 1,3-PD | SP=13.7 | | | | | | | | | | | | | | | |
| Water-soluble organic solvents | Water-soluble organic solvent (S2) with SP value of 12 to 14 | Other | DEG | SP=13.0 | | | | | | | | | | | | | | | |
| Water-soluble organic solvents | Water-soluble organic solvent (S2) with SP value of 12 to 14 | Other | EtOH | SP=12.6 | | | | | | | | | | | | | | | |
| Water-soluble organic solvents | Other water-soluble organic solvent | | EG | | | | | | | | | | | | | | | | |
| Water-soluble organic solvents | Other water-soluble organic solvent | | 1,2-HexD | | | | | | | | | | | | | | | | |
| Water-soluble organic solvents | Other water-soluble organic solvent | | BDG | | | | | | | | | | | | | | | | |
| Water-soluble organic solvents | Other water-soluble organic solvent | | PGM | | | | | | | | | | | | | | | | |
| Water-soluble organic solvents | Other water-soluble organic solvent | | DPM | | | | | | | | | | | | | | | | |
| Surfactants | Acetylenediol-based surfactant with HLB value of 10 or less | | SF104 | HLB=3 | | 0.5 | 0.5 | 0.5 | 0.5 | 0.5 | 0.5 | 0.5 | 0.5 | 0.5 | 0.5 | 0.5 | 0.5 | 0.5 | 0.5 |
| Surfactants | Acetylenediol-based surfactant with HLB value of 10 or less | | SF420 | HLB=4 | | | | | | | | | | | | | | | |
| Surfactants | Acetylenediol-based surfactant with HLB value of 10 or less | | SF2502 | HLB=8 | 1.5 | | | | | | | | | | | | | | |
| Surfactants | Acetylenediol-based surfactant with HLB value of 10 or less | | SF440 | HLB=8.1 | | | | | | | | | | | | | | | |
| Surfactants | Acetylenediol-based surfactant with HLB value of 10 or less | | Acetylenediol compound 1 | HLB=9.6 | | | | | | | | | | | | | | | |
| Surfactants | Acetylenediol-based surfactant with HLB value greater than 10 | | Acetylenediol compound 2 | HLB=11.1 | | | | | | | | | | | | | | | |
| Surfactants | Siloxane-based surfactant | | TW280 | | 0.3 | | | | | | | | | | | | | | |
| Surfactants | Siloxane-based surfactant | | TW270 | | | | | | | | | | | | | | | | |
| Surfactants | Siloxane-based surfactant | | KF642 | | | | | | | | | | | | | | | | |
| Surfactants | Siloxane-based surfactant | | KF3551A | | | | | | | | | | | | | | | | |
| Surfactants | Siloxane-based surfactant | | BYK-3420 | | | | | | | | | | | | | | | | |
| Surfactants | (Poly)ethylene glycol monoalkyl ether-based surfactant | Terminal alkyl carbon number (CE):8 | Nonion EH-208 | EO groups: 8(CE×1.0) | | 1.5 | | | | | | | | | | | | | |
| Surfactants | (Poly)ethylene glycol monoalkyl ether-based surfactant | Terminal alkyl carbon number (CE):10 | Lutensol XP40 | EO groups: 4(CE×0.4) | | | 1.5 | | | | | | | | | | | | |
| Surfactants | (Poly)ethylene glycol monoalkyl ether-based surfactant | Terminal alkyl carbon number (CE):10 | Lutensol XP80 | EO groups: 8(CE×0.8) | | | | 1.5 | | | | | | | | | | | |
| Surfactants | (Poly)ethylene glycol monoalkyl ether-based surfactant | Terminal alkyl carbon number (CE):10 | Lutensol XP140 | EO groups: 14(CE×1.4) | | | | | 1.5 | | | | | | | | | | |
| Surfactants | (Poly)ethylene glycol monoalkyl ether-based surfactant | Terminal alkyl carbon number (CE):12 | Blaunon EL-1509P | EO groups: 9(CE×0.8) | | | | | | 1.5 | | | | | | | | | |
| Surfactants | (Poly)ethylene glycol monoalkyl ether-based surfactant | Terminal alkyl carbon number (CE):12 | Blaunon EL-1512P | EO groups: 12(CE×1.0) | | | | | | | 1.5 | | | | | | | | |
| Surfactants | (Poly)ethylene glycol monoalkyl ether-based surfactant | Terminal alkyl carbon number (CE):12 | Blaunon EL-1515 | EO groups: 15(CE×1.3) | | | | | | | | 1.5 | | | | | | | |
| Surfactants | (Poly)ethylene glycol monoalkyl ether-based surfactant | Terminal alkyl carbon number (CE):12 | Blaunon EL-1521 | EO groups: 21(CE×1.8) | | | | | | | | | 1.5 | | | | | | |
| Surfactants | (Poly)ethylene glycol monoalkyl ether-based surfactant | Terminal alkyl carbon number (CE):12 | Blaunon EL-1530 | EO groups: 30(CE×2.5) | | | | | | | | | | 1.5 | | | | | |
| Surfactants | (Poly)ethylene glycol monoalkyl ether-based surfactant | Terminal alkyl carbon number (CE):12 | Blaunon EL-1540P | EO groups: 40(CE×3.3) | | | | | | | | | | | 1.5 | | | | |
| Surfactants | (Poly)ethylene glycol monoalkyl ether-based surfactant | Terminal alkyl carbon number (CE):12 to 13 | Newcol 2303 | EO groups: 3(CE×0.2 to 0.3) | | | | | | | | | | | | 1.5 | | | |
| Surfactants | (Poly)ethylene glycol monoalkyl ether-based surfactant | Terminal alkyl carbon number (CE):12 to 13 | Newcol 2320 | EO groups: 20(CE×1.5 to 1.7) | | | | | | | | | | | | | 1.5 | | |
| Surfactants | (Poly)ethylene glycol monoalkyl ether-based surfactant | Terminal alkyl carbon number (CE):18 | Blaunon SR-720 | EO groups: 20(CE×1.1) | | | | | | | | | | | | | | 1.5 | |
| Surfactants | (Poly)ethylene glycol monoalkyl ether-based surfactant | Terminal alkyl carbon number (CE):18 | Blaunon SR-730 | EO groups: 30(CE×1.7) | | | | | | | | | | | | | | | 1.5 |
| Surfactants | (Poly)ethylene glycol monoalkyl ether-based surfactant | Terminal alkyl carbon number (CE):18 | Blaunon SR-750F | EO groups: 50(CE×2.8) | | | | | | | | | | | | | | | |
| Resins | | | Resin 1 | Tg=39.7°C | | | | | | | | | | | | | | | |
| Resins | | | Resin 2 | Tg=59.7°C | | | | | | | | | | | | | | | |
| Resins | | | Resin 3 | Tg=94.9°C | | | | | | | | | | | | | | | |
| Resins | | | Resin 4 | Tg=106.1°C | 15 | 15 | 15 | 15 | 15 | 15 | 15 | 15 | 15 | 15 | 15 | 15 | 15 | 15 | 15 |
| Resins | | | Resin 5 | Tg=106.1°C | | | | | | | | | | | | | | | |
| Pigment dispersion | Type | | | | black | white | white | white | white | white | white | white | white | white | white | white | white | white | white |
| Pigment dispersion | Blend amount | | | | 30 | 40 | 40 | 40 | 40 | 40 | 40 | 40 | 40 | 40 | 40 | 40 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 12 | 15 | 15 | 15 | 15 | 15 | 15 | 15 | 15 | 15 | 15 | 15 | 15 | 15 | 15 |
| Blend amounts | Amount of resin with Tg of 50 to 130°C | | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Specs | Amount of siloxane-based surfactant / (poly)ethylene glycol monoalkyl ether-based surfactant relative to amount of acetylenediol-based surfactant with HLB value greater than 10 | | | | 0.20 | 3.0 | 3.0 | 3.0 | 3.0 | 3.0 | 3.0 | 3.0 | 3.0 | 3.0 | 3.0 | 3.0 | 3.0 | 3.0 | 3.0 |
| Specs | Amount of alkanediol of 3 to 5 carbon atoms relative to amount of solvent (S1) | | | | 4.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| Specs | Amount of DPnP relative to total amount of PGM, PnP and PnB | | | | 1.0 | --- | --- | --- | --- | --- | --- | --- | --- | --- | --- | --- | --- | --- | --- |

[Table 3 continued]

| Aqueous inkjet ink No. | | | | | 151 | 152 | 153 | 154 | 155 | 156 | 157 | 158 | 159 | 160 | 161 | 162 |
|---|---|---|---|---|---|---|---|---|---|---|---|---|---|---|---|---|
| Water | | | | | 24.95 | 24.95 | 24.95 | 24.95 | 24.95 | 26.65 | 26.45 | 26.15 | 26.15 | 23.95 | 23.95 | 24.45 |
| Water-soluble organic solvents | (Di)propylene glycol monoalkyl ether-based solvent (S1) | | PnP | | | | | | | | | | | | | |
| | | | DPnP | | 3 | 3 | 3 | 3 | 3 | 3 | 3 | 3 | 3 | 3 | 3 | 3 |
| | | | PnB | | | | | | | | | | | | | |
| | | | DPnB | | | | | | | | | | | | | |
| | Water-soluble organic solvent (S2) with SP value of 12 to 14 | Alkanediol of 3 to 5 carbon atoms | 1,5-PenD | SP=12.4 | | | | | | | | | | | | |
| | | | 1,2-BD | SP=12.8 | | | | | | | | | | | | |
| | | | 1,3-BD | SP=12.8 | | | | | | | | | | | | |
| | | | 1,2-PD | SP=13.5 | 15 | 12 | 12 | 12 | 12 | 15 | 15 | 15 | 15 | 15 | 15 | 15 |
| | | | 1,3-PD | SP=13.7 | | | | | | | | | | | | |
| | | Other | DEG | SP=13.0 | | | | | | | | | | | | |
| | | | EtOH | SP=12.6 | | | | | | | | | | | | |
| | Other water-soluble organic solvent | | EG | | | | | | | | | | | | | |
| | | | 1,2-HexD | | | | | | | | | | | | | |
| | | | BDG | | | | | | | | | | | | | |
| | | | PGM | | | 3 | 3 | 3 | 3 | | | | | | | |
| | | | DPM | | | | | | | | | | | | | |
| Surfactants | Acetylenediol-based surfactant with HLB value of 10 or less | | SF104 | HLB=3 | 0.5 | 0.5 | 0.5 | 0.5 | 0.5 | 0.1 | 0.1 | 0.4 | 0.2 | 1.0 | 0.7 | |
| | | | SF420 | HLB=4 | | | | | | | | | | | | |
| | | | SF2502 | HLB=8 | | | | | | | | | | | | 0.5 |
| | | | SF440 | HLB=8.1 | | | | | | | | | | | | |
| | | | Acetylenediol compound 1 | HLB=9.6 | | | | | | | | | | | | |
| | Acetylenediol-based surfactant with HLB value greater than 10 | | Acetylenediol compound 2 | HLB=11.1 | | | | | | | | | | | | |
| | Siloxane-based surfactant | | TW280 | | | | | | | | | | | | | 1.5 |
| | | | TW270 | | | | | | | | | | | | | |
| | | | KF642 | | | | | | | | | | | | | |
| | | | KF3551A | | | | | | | | | | | | | |
| | | | BYK-3420 | | | | | | | | | | | | | |
| | (Poly)ethylene glycol monoalkyl ether-based surfactant | Terminal alkyl carbon number (CE):8 | Nonion EH-208 | EO groups: 8(CE×1.0) | | | | | | | | | | | | |
| | | Terminal alkyl carbon number (CE):10 | Lutensol XP40 | EO groups: 4(CE×0.4) | | | | | | | | | | | | 0.5 |
| | | | Lutensol XP80 | EO groups: 8(CE×0.8) | | | | | | | | | | | | |
| | | | Lutensol XP140 | EO groups: 14(CE×1.4) | | | | | | | | | | | | |
| | | Terminal alkyl carbon number (CE):12 | Blaunon EL-1509P | EO groups: 9(CE×0.8) | | | | | | | | | | | | |
| | | | Blaunon EL-1512P | EO groups: 12(CE×1.0) | | | | | | | | | | | | |
| | | | Blaunon EL-1515 | EO groups: 15(CE×1.3) | | 1.5 | | | | | | | | | | |
| | | | Blaunon EL-1521 | EO groups: 21(CE×1.8) | | | 1.5 | | | 0.2 | 0.4 | 0.4 | 0.6 | 2.0 | 2.3 | |
| | | | Blaunon EL-1530 | EO groups: 30(CE×2.5) | | | | 1.5 | | | | | | | | |
| | | | Blaunon EL-1540P | EO groups: 40(CE×3.3) | | | | | 1.5 | | | | | | | |
| | | Terminal alkyl carbon number (CE):12 to 13 | Newcol 2303 | EO groups: 3(CE×0.2 to 0.3) | | | | | | | | | | | | |
| | | | Newcol 2320 | EO groups: 20(CE×1.5 to 1.7) | | | | | | | | | | | | |
| | | Terminal alkyl carbon number (CE):18 | Blaunon SR-720 | EO groups: 20(CE×1.1) | | | | | | | | | | | | |
| | | | Blaunon SR-730 | EO groups: 30(CE×1.7) | | | | | | | | | | | | |
| | | | Blaunon SR-750F | EO groups: 50(CE×2.8) | 1.5 | | | | | | | | | | | |
| Resins | | | Resin 1 | Tg=39.7°C | | | | | | | | | | | | |
| | | | Resin 2 | Tg=59.7°C | | | | | | | | | | | | |
| | | | Resin 3 | Tg=94.9°C | | | | | | | | | | | | |
| | | | Resin 4 | Tg=106.1°C | 15 | 15 | 15 | 15 | 15 | 15 | 15 | 15 | 15 | 15 | 15 | 15 |
| | | | Resin 5 | Tg=106.1°C | | | | | | | | | | | | |
| Pigment dispersion | Type | | | | white | white | white | white | white | white | white | white | white | white | white | white |
| | Blend amount | | | | 40 | 40 | 40 | 40 | 40 | 40 | 40 | 40 | 40 | 40 | 40 | 40 |
| Other component | Preservative | | Proxel GXL | | 0.05 | 0.05 | 0.05 | 0.05 | 0.05 | 0.05 | 0.05 | 0.05 | 0.05 | 0.05 | 0.05 | 0.05 |
| Total | | | | | 100 | 100 | 100 | 100 | 100 | 100 | 100 | 100 | 100 | 100 | 100 | 100 |
| Blend amounts | Amount of water-soluble organic solvent (S2) with SP value of 12 to 14 | | | | 15 | 15 | 12 | 12 | 15 | 15 | 15 | 15 | 15 | 15 | 15 | 15 |
| | Amount of resin with Tg of 50 to 130°C | | | | 4.5 | 4.5 | 4.5 | 4.5 | 4.5 | 4.5 | 4.5 | 4.5 | 4.5 | 4.5 | 4.5 | 4.5 |
| Specs | Amount of resin with Tg of 50 to 130°C relative to amount of solvent (S1) | | | | 1.5 | 1.5 | 1.5 | 1.5 | 1.5 | 1.5 | 1.5 | 1.5 | 1.5 | 1.5 | 1.5 | 1.5 |
| | Amount of siloxane-based surfactant / (poly)ethylene glycol monoalkyl ether-based surfactant relative to amount of acetylenediol-based surfactant with HLB value greater than 10 | | | | 3.0 | 3.0 | 3.0 | 3.0 | 3.0 | 2.0 | 4.0 | 1.0 | 3.0 | 2.0 | 3.3 | 4.0 |
| | Amount of alkanediol of 3 to 5 carbon atoms relative to amount of solvent (S1) | | | | 5.0 | 5.0 | 4.0 | 4.0 | 5.0 | 5.0 | 5.0 | 5.0 | 5.0 | 5.0 | 5.0 | 5.0 |
| | Amount of DPnP relative to total amount of PGM, PnP and PnB | | | | --- | --- | 1.0 | 1.0 | --- | --- | --- | --- | --- | --- | --- | --- |

The meanings and product name details for each of the abbreviations used above in Table 3 are as described below. In Table 3, "SP" represents the SP value (units: $(cal/cm^3)^{1/2}$), "HLB" represents the HLB value, and "Tg" represents the glass transition temperature.

- PnP: propylene glycol monopropyl ether
- DPnP: dipropylene glycol monopropyl ether
- PnB: propylene glycol monobutyl ether
- DPnB: dipropylene glycol monobutyl ether
- 1,5-PentD: 1,5-pentanediol (SP value: 12.4)
- 1,2-BD: 1,2-butanediol (SP value: 12.8)
- 1,3-BD: 1,3-butanediol (SP value: 12.8)
- 1,2-PD: 1,2-propanediol (SP value: 13.5)
- 1,3-PD: 1,3-propanediol (SP value: 13.7)
- DEG: diethylene glycol (SP value: 13.0)
- EtOH: ethanol (SP value: 12.6)
- EG: ethylene glycol (SP value: 14.8)
- 1,2-HexD: 1,2-hexanediol (SP value: 11.8)
- BDG: diethylene glycol monobutyl ether (SP value: 10.5)
- PGM: propylene glycol monomethyl ether (SP value: 11.3)
- DPM: dipropylene glycol monomethyl ether (SP value: 10.4)
- SF104: SURFYNOL 104 (an acetylenediol, manufactured by Evonik Japan Co., Ltd., HLB value: 3)
- SF420: SURFYNOL 420 (an acetylenediol, manufactured by Evonik Japan Co., Ltd., HLB value: 4)
- SF2502: SURFYNOL 2502 (an acetylenediol, manufactured by Evonik Japan Co., Ltd., HLB value: 8)
- SF440: SURFYNOL 440 (an acetylenediol, manufactured by Evonik Japan Co., Ltd., HLB value: 8.1)
- TW280: TEGO Wet 280 (a side chain polyether-modified siloxane having 4 to 12 silicon atoms, and having at least an ethylene oxide group, manufactured by Evonik Japan Co., Ltd., dynamic viscosity at 25°C: 30 $mm^2/s$)
- TW270: TEGO Wet 270 (a side chain polyether-modified siloxane having 4 to 12 silicon atoms, and having at least an ethylene oxide group, manufactured by Evonik Japan Co., Ltd., dynamic viscosity at 25°C: 25 $mm^2/s$)
- KF642: KF-642 (a side chain polyether-modified siloxane having 4 to 12 silicon atoms, and having at least an ethylene oxide group, manufactured by Shin-Etsu Chemical Co., Ltd., dynamic viscosity at 25°C: 50 $mm^2/s$)
- KF351A: KF-351A (a side chain polyether-modified siloxane having 4 to 12 silicon atoms, and having at least an ethylene oxide group, manufactured by Shin-Etsu Chemical Co., Ltd., dynamic viscosity at 25°C: 75 $mm^2/s$)
- BYK-3420: a siloxane-based surfactant manufactured by BYK-Chemie Japan K.K. (having 4 to 12 silicon atoms, having at least an ethylene oxide group, but not a side chain polyether-modified siloxane, dynamic viscosity at 25°C: 125 $mm^2/s$)
- NONION EH-208: a polyethylene glycol mono-2-ethylhexyl ether manufactured by NOF Corporation (number of carbon atoms in alkyl group at molecular terminal: 8, number of ethylene oxide groups: 8)
- Lutensol XP40: a polyethylene glycol monodecyl ether manufactured by BASF Japan Ltd. (number of carbon atoms in alkyl group at molecular terminal: 10, number of ethylene oxide groups: 4)
- Lutensol XP80: a polyethylene glycol monodecyl ether manufactured by BASF Japan Ltd. (number of carbon atoms in alkyl group at molecular terminal: 10, number of ethylene oxide groups: 8)
- Lutensol XP140: a polyethylene glycol monodecyl ether manufactured by BASF Japan Ltd. (number of carbon atoms in alkyl group at molecular terminal: 10, number of ethylene oxide groups: 14)
- BLAUNON EL-1509P: a polyethylene glycol monolauryl ether manufactured by Aoki Oil Industrial Co., Ltd. (number of carbon atoms in alkyl group at molecular terminal: 12, number of ethylene oxide groups: 9)
- BLAUNON EL-1512P: a polyethylene glycol monolauryl ether manufactured by Aoki Oil Industrial Co., Ltd. (number of carbon atoms in alkyl group at molecular terminal: 12, number of ethylene oxide groups: 12)
- BLAUNON EL-1515: a polyethylene glycol monolauryl ether manufactured by Aoki Oil Industrial Co., Ltd. (number of carbon atoms in alkyl group at molecular terminal: 12, number of ethylene oxide groups: 15)
- BLAUNON EL-1521: a polyethylene glycol monolauryl ether manufactured by Aoki Oil Industrial Co., Ltd. (number of carbon atoms in alkyl group at molecular terminal: 12, number of ethylene oxide groups: 21)
- BLAUNON EL-1530: a polyethylene glycol monolauryl ether manufactured by Aoki Oil Industrial Co., Ltd. (number of carbon atoms in alkyl group at molecular terminal: 12, number of ethylene oxide groups: 30)
- BLAUNON EL-1540P: a polyethylene glycol monolauryl ether manufactured by Aoki Oil Industrial Co., Ltd. (number of carbon atoms in alkyl group at molecular terminal: 12, number of ethylene oxide groups: 40)
- NEWCOL 2303: a polyethylene glycol monoalkyl ether-based surfactant manufactured by Nippon Nyukazai Co., Ltd. (number of carbon atoms in alkyl group at molecular terminal: 12 or 13, number of ethylene oxide groups: 3)
- NEWCOL 2320: a polyethylene glycol monoalkyl ether-based surfactant manufactured by Nippon Nyukazai Co., Ltd. (number of carbon atoms in alkyl group at molecular terminal: 12 or 13, number of ethylene oxide groups: 20)
- BLAUNON SR-720: a polyethylene glycol monostearyl ether manufactured by Aoki Oil Industrial Co., Ltd. (number of carbon atoms in alkyl group at molecular terminal: 18, number of ethylene oxide groups: 20)
- BLAUNON SR-730: a polyethylene glycol monostearyl ether manufactured by Aoki Oil Industrial Co., Ltd. (number of

carbon atoms in alkyl group at molecular terminal: 18, number of ethylene oxide groups: 30)

- BLAUNON SR-750F: a polyethylene glycol monostearyl ether manufactured by Aoki Oil Industrial Co., Ltd. (number of carbon atoms in alkyl group at molecular terminal: 18, number of ethylene oxide groups: 50)
- PROXEL GXL: a dipropylene glycol-water solution of 1,2-benzisothiazol-3-one (1,2-benzisothiazol-3-one : dipropylene glycol : water = 2:6:2, manufactured by Arch Chemicals, Inc.)

[Examples 1 to 155, Comparative Examples 1 to 7]

Using each of the above aqueous inkjet inks 1 to 162, the evaluations 1 to 3 described below were conducted. The evaluation results were as shown in Table 4.

<Evaluation 1: Evaluation of Jetting Stability>

An inkjet printing apparatus mounted with an inkjet head KJ4B-1200 manufactured by Kyocera Corporation (design resolution: 1,200 dpi, nozzle diameter: 20 μm) installed above a conveyor was prepared. Each of the aqueous inkjet inks described above was used to fill the inkjet head, a nozzle check pattern was printed, and the pattern was inspected to confirm there were no nozzle failures (a phenomenon in which the aqueous inkjet ink is not jetted from the nozzle).

Subsequently, an OPP film (FOR-AQ, thickness: 20 μm) manufactured by Futamura Chemical Co., Ltd. that had been precut to A4 size (width 21 cm × length 30 cm) was fixed to the conveyor as a printing substrate. The conveyor was then driven at a constant speed, and as the printing substrate passed beneath the mounted position of the inkjet head, the aqueous inkjet ink was jetted onto the printing substrate under conditions including a drop volume of 2 pL, thereby printing a solid image.

Following printing of the number of solid images mentioned below using the above method, another nozzle check pattern was printed, the number of nozzle failures was counted by visual inspection, and the jetting stability was evaluated. The evaluation criteria were as shown below, with evaluations of A, B and C being deemed practically applicable results. Evaluations were conducted with the number of solid images printed set to either one sheet or five sheets. However, if the jetting stability was evaluated as "D" after printing one solid image, then an evaluation after printing five sheets of the solid image was not conducted.

A: absolutely no nozzle failures
B: from 1 to 4 nozzle failures
C: from 5 to 9 nozzle failures
D: at least 10 nozzle failures

<Production of Printed Items>

An inkjet printing apparatus mounted with an inkjet head KJ4B-1200 manufactured by Kyocera Corporation (design resolution: 1,200 dpi, nozzle diameter: 20 μm) installed above a conveyor was prepared, and each of the aqueous inkjet inks described above was used to fill the inkjet head. Further, an OPP film same as that used in Evaluation 1 was fixed to the conveyor. Subsequently, the conveyor was driven at a speed of 50 m/minute, and as the printing substrate passed beneath the installation position of the inkjet head, the aqueous inkjet ink was jetted onto the printing substrate under conditions including a drop volume of 2 pL, thereby printing an image. Immediately after printing, the printed substrate was placed in a forced convection constant temperature oven set to 70°C and dried for one minute to complete production of a printed item.

The printed items produced using the method described above were of the two types described below. Further, for each of the aqueous inkjet inks, the following two types of printed items were produced.

- Solid printed item: printed item with print coverage rate of 100% (width 15 cm × length 30 cm)
- Gradation printed item: a printed item in which a gradation image for which the print coverage rate was varied continuously between 5 and 80% was printed across a region of width 10 cm × length 30 cm

<Evaluation 2: Evaluation of Solid Coverage>

In the case of the solid printed item produced using the method described above, the unprinted surface of the printed item was affixed to a mounting board (a black mounting board in the case of an item printed with an aqueous white ink, or a white mounting board in the case of an item printed with an aqueous black ink), and a solid coverage evaluation was conducted by counting the number of streak-like voids (streak-shaped voids with a length of at least 1 cm) by visual

inspection. The evaluation criteria were as follows, with evaluations of A, B and C being deemed practically applicable results.

A: not even one streak-like void was observed.
B: from 1 to 4 streak-like voids were observed.
C: from 5 to 9 streak-like voids were observed.
D: at least 10 streak-like voids were observed.

<Evaluation 3: Evaluation of Blocking Resistance>

A solid printed item printed using the method described above was cut to a size of 4 cm × 4 cm, and the printed surface and the unprinted surface of a printing substrate of the same type as that used in the printing were stacked on top of one another. Using this stacked item as a test piece, a blocking test was conducted using a constant load permanent strain tester (CO-201 manufactured by Tester Sangyo Co., Ltd.). The conditions during the blocking test included a load of 10 kg/cm$^2$, an environmental temperature of 40°C, an environmental humidity of 80%RH, and a standing time mentioned below. Following elapsing of the standing period, the test piece was removed from the constant load permanent strain tester, and the stacked printing substrates were peeled instantly apart while maintaining an angle of 90° between the substrates. The blocking resistance was then evaluated on the basis of the sensation during peeling (the peel resistance), and the state of the printed surface following the peeling (visual inspection). The evaluation criteria were as follows, with evaluations of A, B and C being deemed practically applicable results. Further, evaluations were conducted with the standing time in the blocking test set to 24 hours and 48 hours. However, if the blocking resistance was evaluated as "D" when the standing time was 24 hours, then an evaluation at a standing time of 48 hours was not conducted.

A: no peeling resistance, and none of the aqueous inkjet ink layer adhered to the unprinted surface of the printing substrate
B: slight resistance was noticed during peeling, but none of the aqueous inkjet ink layer adhered to the unprinted surface of the printing substrate
C: a portion of the aqueous inkjet ink layer adhered to the unprinted surface of the printing substrate, but the degree of adhesion was not more than 30% of the surface area of the stacked portion
D: a portion of the aqueous inkjet ink layer adhered to the unprinted surface of the printing substrate, and the degree of adhesion exceeded 30% of the surface area of the stacked portion

[Table 4]

| | | | | Comparative Example 1 | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|---|---|---|---|---|---|---|---|---|---|---|---|---|
| Inkjet ink No. | | | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
| Evaluation results | Evaluation 1 | Jetting stability | Solid image one sheet printed | A | A | A | A | A | A | A | A | A | A | A | A | A | A | A | A | A | B | A | A | A | B | A | A | A |
| | | | Solid image five sheets printed | B | B | A | A | A | A | A | A | B | B | A | A | A | A | A | B | A | B | B | A | A | C | B | A | B |
| | Evaluation 2 | Solid coverage | | A | A | A | A | A | A | A | A | A | A | A | A | A | A | A | A | A | A | A | A | A | A | A | A | A |
| | Evaluation 3 | Blocking resistance | 24 hours standing | D | B | B | A | A | A | A | A | A | A | A | A | A | B | B | A | A | C | B | B | B | C | A | A | A |
| | | | 48 hours standing | no test | C | B | A | A | A | A | A | B | B | B | A | A | C | B | B | B | C | C | C | B | C | B | A | B |

| | | | | Example 25 | Example 26 | Example 27 | Example 28 | Example 29 | Example 30 | Example 31 | Example 32 | Example 33 | Example 34 | Example 35 | Example 36 | Example 37 | Example 38 | Example 39 | Example 40 | Example 41 | Example 42 | Example 43 | Example 44 | Example 45 | Example 46 | Example 47 | Example 48 | Example 49 |
|---|---|---|---|---|---|---|---|---|---|---|---|---|---|---|---|---|---|---|---|---|---|---|---|---|---|---|---|---|
| Inkjet ink No. | | | | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 |
| Evaluation results | Evaluation 1 | Jetting stability | Solid image one sheet printed | A | A | A | B | B | C | C | C | C | A | A | A | A | A | B | B | B | A | C | A | A | A | A | A | B |
| | | | Solid image five sheets printed | A | B | B | C | B | C | C | C | C | B | B | B | B | B | C | C | B | A | C | B | B | A | A | A | B |
| | Evaluation 2 | Solid coverage | | A | A | A | A | A | A | A | A | A | A | A | A | A | A | A | B | A | A | B | A | A | A | A | A | A |
| | Evaluation 3 | Blocking resistance | 24 hours standing | A | A | A | A | A | B | B | C | B | A | A | A | A | A | B | B | A | A | B | A | A | A | A | A | A |
| | | | 48 hours standing | B | B | B | B | B | C | B | C | B | B | B | B | B | B | C | C | B | A | C | A | A | A | A | A | B |

| | | | | Example 50 | Example 51 | Example 52 | Example 53 | Example 54 | Example 55 | Example 56 | Example 57 | Example 58 | Example 59 | Example 60 | Example 61 | Comparative Example 2 | Comparative Example 3 | Example 62 | Example 63 | Example 64 | Example 65 | Example 66 | Example 67 | Example 68 | Example 69 | Comparative Example 4 | Example 70 | Example 71 |
|---|---|---|---|---|---|---|---|---|---|---|---|---|---|---|---|---|---|---|---|---|---|---|---|---|---|---|---|---|
| Inkjet ink No. | | | | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 |
| Evaluation results | Evaluation 1 | Jetting stability | Solid image one sheet printed | B | A | C | A | A | A | A | B | B | B | C | B | D | D | B | B | B | B | B | A | B | B | C | C | C |
| | | | Solid image five sheets printed | C | A | C | A | B | B | B | C | C | C | C | C | no test | no test | C | C | C | B | B | A | B | B | C | C | B |
| | Evaluation 2 | Solid coverage | | A | A | C | A | A | B | B | B | A | A | A | A | A | A | A | A | A | A | A | A | A | B | C | B | B |
| | Evaluation 3 | Blocking resistance | 24 hours standing | A | A | C | B | B | C | C | C | A | A | B | B | B | B | A | B | B | B | B | A | B | C | D | C | C |
| | | | 48 hours standing | B | A | C | B | B | C | C | C | B | B | C | C | C | C | B | C | C | B | B | A | B | C | n/a | C | C |

| | | | | Example 72 | Example 73 | Example 74 | Example 75 | Example 76 | Example 77 | Example 78 | Example 79 | Example 80 | Comparative Example 5 | Example 81 | Example 82 | Example 83 | Example 84 | Example 85 | Example 86 | Example 87 | Example 88 | Example 89 | Example 90 | Example 91 | Example 92 | Example 93 | Example 94 | Example 95 |
|---|---|---|---|---|---|---|---|---|---|---|---|---|---|---|---|---|---|---|---|---|---|---|---|---|---|---|---|---|
| Inkjet ink No. | | | | 76 | 77 | 78 | 79 | 80 | 81 | 82 | 83 | 84 | 85 | 86 | 87 | 88 | 89 | 90 | 91 | 92 | 93 | 94 | 95 | 96 | 97 | 98 | 99 | 100 |
| Evaluation results | Evaluation 1 | Jetting stability | Solid image one sheet printed | C | C | C | B | B | A | A | A | C | D | C | B | B | A | A | A | A | A | A | A | A | B | B | B | A |
| | | | Solid image five sheets printed | B | C | C | C | B | A | A | A | C | no test | C | C | C | B | A | B | A | A | A | B | A | B | C | C | B |
| | Evaluation 2 | Solid coverage | | B | A | A | A | A | A | A | A | B | C | C | B | B | A | A | A | A | A | A | A | A | A | A | A | A |
| | Evaluation 3 | Blocking resistance | 24 hours standing | C | B | B | B | B | A | A | A | B | C | B | A | A | A | A | A | A | A | A | A | A | B | C | C | A |
| | | | 48 hours standing | C | C | C | C | B | A | A | A | C | C | B | B | A | B | A | B | A | A | A | B | A | C | C | C | B |

[Table 4 continued]

| | | | | Example 96 | Example 97 | Example 98 | Example 99 | Example 100 | Example 101 | Example 102 | Example 103 | Example 104 | Example 105 | Example 106 | Example 107 | Example 108 | Example 109 | Comparative Example 6 | Comparative Example 7 | Example 110 | Example 111 | Example 112 | Example 113 | Example 114 | Example 115 | Example 116 | Example 117 | Example 118 |
|---|---|---|---|---|---|---|---|---|---|---|---|---|---|---|---|---|---|---|---|---|---|---|---|---|---|---|---|---|
| Inkjet ink No. | | | | 101 | 102 | 103 | 104 | 105 | 106 | 107 | 108 | 109 | 110 | 111 | 112 | 113 | 114 | 115 | 116 | 117 | 118 | 119 | 120 | 121 | 122 | 123 | 124 | 125 |
| Evaluation results | Evaluation 1 | Jetting stability | Solid image one sheet printed | C | C | A | B | B | B | B | B | B | A | A | A | B | B | D | D | C | C | A | A | A | A | B | B | B |
| | | | Solid image five sheets printed | C | C | B | C | C | C | C | C | C | A | A | A | B | C | no test | no test | C | C | B | A | B | A | C | C | C |
| | Evaluation 2 | Solid coverage | | B | B | A | A | A | A | A | A | A | A | A | A | A | A | D | C | C | C | A | A | A | A | A | A | A |
| | Evaluation 3 | Blocking resistance | 24 hours standing | C | C | A | A | C | C | C | C | B | A | A | A | B | B | B | B | B | B | A | A | A | A | A | B | B |
| | | | 48 hours standing | C | C | B | B | C | C | C | C | C | A | A | A | B | C | C | C | C | B | B | A | A | A | B | C | C |

| | | | | Example 119 | Example 120 | Example 121 | Example 122 | Example 123 | Example 124 | Example 125 | Example 126 | Example 127 | Example 128 | Example 129 | Example 130 | Example 131 | Example 132 | Example 133 | Example 134 | Example 135 | Example 136 | Example 137 | Example 138 | Example 139 | Example 140 | Example 141 | Example 142 | Example 143 |
|---|---|---|---|---|---|---|---|---|---|---|---|---|---|---|---|---|---|---|---|---|---|---|---|---|---|---|---|---|
| Inkjet ink No. | | | | 126 | 127 | 128 | 129 | 130 | 131 | 132 | 133 | 134 | 135 | 136 | 137 | 138 | 139 | 140 | 141 | 142 | 143 | 144 | 145 | 146 | 147 | 148 | 149 | 150 |
| Evaluation results | Evaluation 1 | Jetting stability | Solid image one sheet printed | B | C | C | A | A | A | A | A | A | B | B | C | B | B | B | B | B | B | A | A | A | B | A | C | A |
| | | | Solid image five sheets printed | B | C | C | A | A | B | B | B | A | B | A | C | C | C | C | C | C | C | B | B | B | C | B | C | B |
| | Evaluation 2 | Solid coverage | | A | B | B | A | A | A | A | B | B | B | B | A | B | A | A | B | A | A | A | A | B | B | A | C | B |
| | Evaluation 3 | Blocking resistance | 24 hours standing | A | C | C | A | A | A | A | A | A | A | A | C | C | B | A | C | B | A | A | A | B | C | A | B | A |
| | | | 48 hours standing | A | C | C | B | A | B | A | B | A | A | A | C | C | C | B | C | C | B | A | A | C | C | A | C | A |

| | | | | Example 144 | Example 145 | Example 146 | Example 147 | Example 148 | Example 149 | Example 150 | Example 151 | Example 152 | Example 153 | Example 154 | Example 155 |
|---|---|---|---|---|---|---|---|---|---|---|---|---|---|---|---|
| Inkjet ink No. | | | | 151 | 152 | 153 | 154 | 155 | 156 | 157 | 158 | 159 | 160 | 161 | 162 |
| Evaluation results | Evaluation 1 | Jetting stability | Solid image one sheet printed | A | B | A | A | A | C | C | A | A | A | A | A |
| | | | Solid image five sheets printed | B | B | A | A | A | C | C | B | B | B | B | B |
| | Evaluation 2 | Solid coverage | | B | A | A | A | B | C | C | A | A | A | A | A |
| | Evaluation 3 | Blocking resistance | 24 hours standing | A | A | A | A | B | C | B | A | A | A | B | A |
| | | | 48 hours standing | B | A | A | A | B | C | C | B | B | A | B | B |

The results in Table 4 confirmed that the aqueous inkjet ink of an embodiment of the present invention exhibited excellent jetting stability, as well as superior solid coverage and blocking resistance for the printed items.

[Examples 156 to 168]

Furthermore, using printed items produced using the method described above and the above aqueous inkjet inks 6, 11, 14, 16, 18, 20, 22, 23, 25, 27, 29, 31 and 33, an evaluation 4 described below was conducted. The evaluation results were as shown in Table 5.

The amount of the resin having a glass transition temperature within a range from 50 to 130°C, and the ratio of the mass of the (di)propylene glycol monoalkyl ether-based solvent (S1) relative to the mass of the resin with a glass transition temperature within a range from 50 to 130°C are shown again in Table 5.

<Evaluation 4: Evaluation of Abrasion Resistance>

A solid printed item produced using the method described above was cut to a size of width 30 mm × length 220 mm and set in a Gakushin-type rubbing tester (AB-301, manufactured by Tester Sangyo Co., Ltd.). A test cotton cloth (wherein a black cotton cloth was used in the case of the printed items produced using the aqueous inkjet inks 6, 14, 16, 18, 20, 22, 23, 25, 27 and 29, and a white cotton cloth was used in the case of the printed items produced using the aqueous inkjet inks 11, 31 and 33) was attached to the friction element (weight: 200 g), and after rubbing the cotton cloth against the printed item for a prescribed number of repetitions, the abrasion resistance was evaluated by visually confirming the state of the printed item surface and the degree of coloring on the cotton cloth. The evaluation criteria were as shown below, with evaluations of A, B and C being deemed practically applicable results.

A: even after 10 rubbing repetitions, no rubbing marks were visible on the printed surface, and no coloring of the cotton cloth was observed

B: after 6 rubbing repetitions, no rubbing marks were visible on the printed surface, and no coloring of the cotton cloth was observed, but after 10 rubbing repetitions, some rubbing marks were visible on the printed surface and/or some coloring of the cotton cloth was observed

C: after 3 rubbing repetitions, no rubbing marks were visible on the printed surface, and no coloring of the cotton cloth was observed, but after 6 rubbing repetitions, some rubbing marks were visible on the printed surface and/or some coloring of the cotton cloth was observed

D: even after 3 rubbing repetitions, some rubbing marks were visible on the printed surface and/or some coloring of the cotton cloth was observed

[Table 5]

| | | | Example 156 | Example 157 | Example 158 | Example 159 | Example 160 | Example 161 | Example 162 |
|---|---|---|---|---|---|---|---|---|---|
| Inkjet ink No. | | | 6 | 11 | 14 | 16 | 18 | 20 | 22 |
| Blend amount | Amount of resin with Tg of 50 to 130°C | | 4.5 | 4.5 | 1.5 | 6.0 | 0.3 | 1.65 | 2.1 |
| Spec | Amount of resin with Tg of 50 to 130°C relative to amount of solvent (S1) | | 1.5 | 1.5 | 0.50 | 2.0 | 0.10 | 0.55 | 0.42 |
| Evaluation result | Evaluation 4 | Abrasion resistance | A | A | A | A | C | B | B |

| | | | Example 163 | Example 164 | Example 165 | Example 166 | Example 167 | Example 168 |
|---|---|---|---|---|---|---|---|---|
| Inkjet ink No. | | | 23 | 25 | 27 | 29 | 31 | 33 |
| Blend amount | Amount of resin with Tg of 50 to 130°C | | 2.1 | 11.1 | 12.6 | 13.2 | 14.4 | 14.4 |
| Spec | Amount of resin with Tg of 50 to 130°C relative to amount of solvent (S1) | | 0.70 | 3.7 | 4.2 | 4.4 | 4.8 | 7.2 |
| Evaluation result | Evaluation 4 | Abrasion resistance | A | A | A | A | A | A |

The results of the above Evaluation 4 and Evaluation 3 indicated that in those examples using an aqueous inkjet ink for which the ratio of the amount of the resin having a glass transition temperature within a range from 50 to 130°C relative to the total mass of the aqueous inkjet ink was within a range from 2.0 to 13% by mass, and for which the ratio of the mass of the (di)propylene glycol monoalkyl ether-based solvent (S1) relative to the mass of the resin having a glass transition temperature within a range from 50 to 130°C was within a range from 0.7 to 5.0, the blocking resistance and the abrasion resistance were both at level A, confirming printed items of superior quality.

## Claims

**1.** An aqueous inkjet ink comprising a colorant, a resin, a water-soluble organic solvent, and a surfactant, wherein

a Tg value for the resin is within a range from 50 to 130°C,
the water-soluble organic solvent comprises a (di)propylene glycol monoalkyl ether-based solvent (S1) represented by a general formula 1 shown below, and
the surfactant comprises an acetylenediol-based surfactant having an HLB value of 10 or less, and a siloxane-based surfactant and/or (poly)ethylene glycol monoalkyl ether-based surfactant:

General formula 1: $R^1\text{-(O-CH(CH}_3\text{)-CH}_2)_n\text{-OH}$

wherein in general formula 1, $R^1$ represents an alkyl group of 2 to 4 carbon atoms, and n represents 1 or 2.

**2.** The aqueous inkjet ink according to Claim 1, further comprising a water-soluble organic solvent (S2) having an SP value within a range from 12 to 14 $(cal/cm^3)^{1/2}$.

**3.** The aqueous inkjet ink according to Claim 2, wherein the water-soluble organic solvent (S2) having an SP value within a range from 12 to 14 $(cal/cm^3)^{1/2}$ comprises an alkanediol of 3 to 5 carbon atoms.

**4.** The aqueous inkjet ink according to any one of Claims 1 to 3, wherein the (di)propylene glycol monoalkyl ether-based solvent (S1) comprises dipropylene glycol monopropyl ether.

**5.** The aqueous inkjet ink according to any one of Claims 1 to 4, wherein an amount of the acetylenediol-based surfactant having an HLB value of 10 or less is within a range from 0.5 to 1.5% by mass of the aqueous inkjet ink.

**6.** The aqueous inkjet ink according to any one of Claims 1 to 5, wherein a total amount of the siloxane-based surfactant and/or (poly)ethylene glycol monoalkyl ether-based surfactant is within a range from 0.6 to 2.5% by mass of the aqueous inkjet ink.

**7.** The aqueous inkjet ink according to any one of Claims 1 to 5, wherein a total amount of the siloxane-based surfactant and/or (poly)ethylene glycol monoalkyl ether-based surfactant is within a range from 0.6 to 2.0% by mass of the aqueous inkjet ink.

**8.** The aqueous inkjet ink according to any one of Claims 1 to 5, wherein a total amount of the siloxane-based surfactant and/or (poly)ethylene glycol monoalkyl ether-based surfactant is within a range from 0.6 to 1.8% by mass of the

aqueous inkjet ink.

**9.** The aqueous inkjet ink according to any one of Claims 1 to 8, wherein the water-soluble organic solvent comprises dipropylene glycol monopropyl ether, and further comprises at least one compound selected from the group consisting of propylene glycol monomethyl ether, propylene glycol monoethyl ether, propylene glycol monopropyl ether, and propylene glycol monobutyl ether.

**10.** The aqueous inkjet ink according to any one of Claims 1 to 9, wherein a ratio of a mass of the resin having a glass transition temperature within a range from 50 to 130°C relative to a mass of the (di)propylene glycol monoalkyl ether-based solvent (S1) is within a range from 0.5 to 12.5.

**11.** A printed item, obtained by printing the aqueous inkjet ink according to any one of Claims 1 to 10 onto a printing substrate.

**INTERNATIONAL SEARCH REPORT**

International application No.
**PCT/JP2024/020907**

**A. CLASSIFICATION OF SUBJECT MATTER**

***C09D 11/38***(2014.01)i; ***B41J 2/01***(2006.01)i
FI: C09D11/38; B41J2/01 501

According to International Patent Classification (IPC) or to both national classification and IPC

**B. FIELDS SEARCHED**

Minimum documentation searched (classification system followed by classification symbols)

C09D11/38; B41J2/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/171302 A1 (FUJIFILM CORPORATION) 14 September 2023 (2023-09-14) claims, examples 18-20, paragraphs [0082], [0084], [0128]-[0129] | 1-11 |
| X | WO 2023/171455 A1 (FUJIFILM CORPORATION) 14 September 2023 (2023-09-14) claims, examples 21-23, paragraphs [0090], [0109]-[0110] | 1-11 |
| Y | WO 2020/137460 A1 (KAO CORPORATION) 02 July 2020 (2020-07-02) claims, examples, paragraphs [0036]-[0044], [0046]-[0048], [0055] | 1-11 |
| Y | WO 2014/168240 A1 (TOYO INK SC HOLDINGS CO., LTD.) 16 October 2014 (2014-10-16) paragraph [0064] | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/020907**

| Patent document cited in search report | Publication date (day/month/year) | Patent family member(s) | Publication date (day/month/year) |
|---|---|---|---|
| WO 2023/171302 A1 | 14 September 2023 | (Family: none) | |
| WO 2023/171455 A1 | 14 September 2023 | (Family: none) | |
| WO 2020/137460 A1 | 02 July 2020 | EP 3904470 A1<br>claims, examples, paragraphs [0107]-[0113], [0117]-[0122], [0124], [0140]-[0142]<br>CN 113227274 A | |
| WO 2014/168240 A1 | 16 October 2014 | US 2016/0046816 A1<br>paragraph [0069]<br>EP 2985323 A1<br>CN 105102553 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022085548 A
- JP 2020100851 A
- JP 2022102163 A
- JP 2023166390 A
- JP 2001215690 A


### Non-patent literature cited in the description


- Polymer Handbook. Wiley Inc., 1998
- **R.F. FEDORS**. *Polymer Engineering & Science*, 1974, vol. 14 (2), 147-154